(19) **Europäisches Patentamt**
**European Patent Office**
**Office européen des brevets**

(11) **EP 3 979 197 A1**

(12) **EUROPEAN PATENT APPLICATION**

(43) Date of publication:
**06.04.2022 Bulletin 2022/14**

(21) Application number: **21199674.9**

(22) Date of filing: **29.09.2021**

(51) International Patent Classification (IPC):
*G06T 7/00* (2017.01)   *H04N 1/00* (2006.01)
*B41F 33/00* (2006.01)

(52) Cooperative Patent Classification (CPC):
**H04N 1/00015; B41F 33/0036; G06T 7/001;**
**H04N 1/00034; H04N 1/00074; H04N 1/00087;**
**H04N 1/00485; H04N 1/00925; G06T 2207/30144;**
H04N 1/00448; H04N 2201/0091

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.09.2020 JP 2020165830**
**04.06.2021 JP 2021094784**

(71) Applicant: **Ricoh Company, Ltd.**
**Tokyo 143-8555 (JP)**

(72) Inventors:
• **TANAKA, Takuya**
  **Tokyo (JP)**
• **KAMADA, Takuji**
  **Tokyo (JP)**
• **TOKOYODA, Kazuki**
  **Tokyo (JP)**

(74) Representative: **SSM Sandmair**
**Patentanwälte Rechtsanwalt**
**Partnerschaft mbB**
**Joseph-Wild-Straße 20**
**81829 München (DE)**

(54) **IMAGE FORMING DEVICE, INFORMATION PROCESSING DEVICE, COMPUTER-READABLE MEDIUM, AND IMAGE FORMING METHOD**

(57)    An image forming device includes a receiving unit (2081) and a determining unit (2082). The receiving unit (2081) is configured to receive an image to be printed. The determining unit (2082) is configured to determine whether the image received by the receiving unit complies with a condition predetermined to be satisfied for printing.

FIG.30

EP 3 979 197 A1

## Description

### BACKGROUND OF THE INVENTION

#### 1. Field of the Invention

The present invention relates to an image forming device, an information processing device, a computer-readable medium, and an image forming method.

#### 2. Description of the Related Art

Conventionally, an inspection device is known in which an inspection object is illuminated and is then inspected using an imaging camera. For example, in Japanese Translation of PCT International Application Publication No. JP-T-2002-501265, a technique is disclosed in which images taken with an imaging camera are used, and the targets captured in the images are identified.

In recent years, a service is known that enables a user to upload an image via the Internet and print the uploaded image on a specific print target. Then, an inspection device treats the specific print target, on which the uploaded image is printed, as the inspection object and inspects it.

According to the conventional service, although the user becomes able to upload a favorite image (design), if that image is violating predetermined print guidelines that represent the required conditions for image printing, then printing failure becomes likely to occur.

The print guidelines represent the conditions that should be satisfied or that cannot be violated by the source data for printing, and are defined separately for each print target or each service. For example, if the print object is circular in shape and if a circular design having a similar size to the print object is present in the image for printing, then even a slight misalignment in the print position leads to printing failure. In that case, it is possible to think of setting a print guideline indicating that a circular design having a similar size to the print object cannot be included. Moreover, considering the performance of a printing device, it is possible to think of setting print guidelines regarding fine patterns that are difficult to express or designs having specific spatial frequencies.

Moreover, when printing is to be performed on some part of the print object, sometimes it is necessary to have a lager image (design) than the print range so as to ensure that there is no printing failure due to misalignment in the print position. In that case, it is possible to think of setting a print guideline indicating that the image (design) needs to be larger than the print area.

An inspection device compares the uploaded image with the image printed on the print target. If the uploaded image is different than the printed image or if an edge of the image is off the print range due to misalignment in the print position, then the inspection device treats that inspection object as a defective article.

The present invention is made in view of the issues explained above, and it is an object of the invention to reduce the occurrence of printing failure by reducing the instances of printing images that violate the print guidelines representing the required conditions for image printing.

### SUMMARY OF THE INVENTION

According to an aspect of the present invention, an image forming device includes a receiving unit and a determining unit. The receiving unit is configured to receive an image to be printed. The determining unit is configured to determine whether the image received by the receiving unit complies with a condition predetermined to be satisfied for printing.

An aspect of the present invention produces the advantageous effect that it is possible to reduce the occurrence of printing failure by reducing the instances of printing images that violate the print guidelines representing the required conditions for image printing.

### BRIEF DESCRIPTION OF THE DRAWINGS

FIG. 1 is a diagram illustrating an overall configuration of an inspection system according to an embodiment;
FIG. 2 is a diagram illustrating an example of an inspection object;
FIG. 3 is a diagram illustrating a configuration of an inspection device;
FIG. 4 is a diagram illustrating a layout configuration of illumination devices;
FIG. 5 is a diagram illustrating the top view of a slide stage;
FIG. 6 is a block diagram illustrating the electrical connections established in the inspection system;
FIG. 7 is a hardware configuration diagram of an information processing device;
FIG. 8 is a functional block diagram illustrating a functional configuration of the information processing device;
FIG. 9 is a flowchart for explaining an exemplary flow of a luminance setting operation;
FIG. 10 is a flowchart for explaining the flow of an image synthesis operation;
FIG. 11 is a diagram illustrating an example of image synthesis;
FIG. 12 is a flowchart for explaining the flow of an image type identification operation;
FIG. 13 is a diagram illustrating exemplary types of pictorial patterns;
FIG. 14 is a diagram illustrating the pictorial patterns based on the outer periphery/inner periphery;
FIGS. 15A to 15C are diagrams illustrating the level of difficulty of comparing the widths;
FIG. 16 is a diagram illustrating an example of determination threshold values in the case of inspecting the off-center as the print quality of the target image for inspection;

FIG. 17 is a flowchart for explaining the flow of an inspection operation;

FIG. 18 is a diagram illustrating examples of a coefficient $C_{Type}$ corresponding to the image types;

FIG. 19 is a diagram illustrating an example of the inspection result indicating the detected off-center;

FIGS. 20A to 20C are diagrams illustrating a compliance example and a noncompliance example in the case in which a print guideline indicates that the design should be larger than the outer periphery of the print area;

FIG. 21 is a functional block diagram illustrating a functional configuration involved in the compliance determination performed by an inspecting unit regarding the print guidelines;

FIG. 22 is a diagram illustrating an example of a first compliance determination method;

FIGS. 23 to 24B are diagrams illustrating examples of a second compliance determination method;

FIG. 25 is a diagram illustrating an example of a first image correction method;

FIG. 26 is a diagram illustrating an example of a second image correction method;

FIGS. 27 to 29 are diagrams illustrating exemplary notifications by a notifying unit;

FIG. 30 is a flowchart for explaining an exemplary flow of the operations performed by the inspecting unit included in an image forming device according to a first modification example;

FIG. 31 is a flowchart for explaining an exemplary flow of operations performed by the inspecting unit included in an image processing device according to a second modification example;

FIG. 32 is a flowchart for explaining an exemplary flow of operations performed by the inspecting unit included in an image forming device according to a third modification example;

FIG. 33 is a flowchart for explaining an exemplary flow of operations performed by the inspecting unit included in an image forming device according to a fourth modification example; and

FIG. 34 is a flowchart for explaining an exemplary flow of operations performed when the information processing device is installed in an image forming device according to a fifth modification example.

The accompanying drawings are intended to depict exemplary embodiments of the present invention and should not be interpreted to limit the scope thereof. Identical or similar reference numerals designate identical or similar components throughout the various drawings.

DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

An embodiment of the present invention will be described in detail below with reference to the drawings.

An exemplary embodiment of an image forming device, an information processing device, a computer program product, and an image forming method is described below in detail with reference to the accompanying drawings.

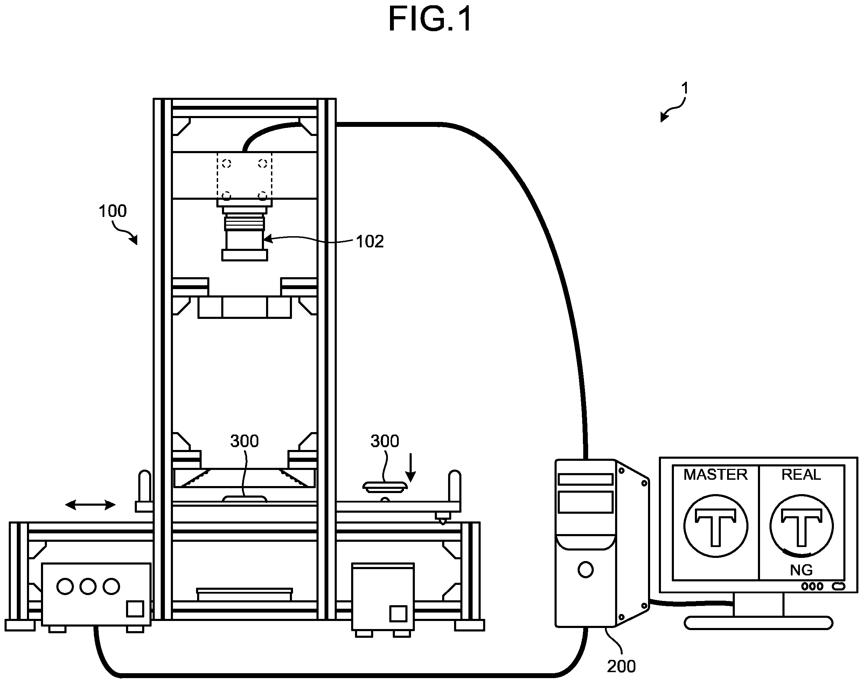

FIG. 1 is a diagram illustrating an overall configuration of an inspection system 1 according to the embodiment.

As illustrated in FIG. 1, the inspection system 1 includes an inspection device 100 and an information processing device 200. The information processing device 200 is a personal computer (PC) or a server. The information processing device 200 controls the inspection device 100. Moreover, the information processing device 200 also functions as an image inspection device.

In the inspection device 100, an inspection object 300 representing the print quality inspection target is illuminated and is then inspected using an imaging device 102.

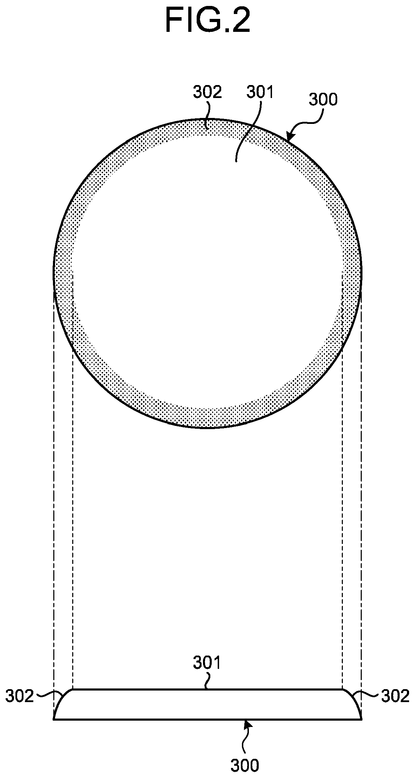

FIG. 2 is a diagram illustrating an example of the inspection object 300. As illustrated in FIG. 2, the inspection object 300 according to the embodiment is a three-dimensional disc having some thickness. The inspection object 300 has a flat surface 301, and an edge region surface 302 that is curved with reference to the flat surface 301. The flat surface 301 has embossing performed thereon.

On the surface of the inspection object 300, various designs matching the user's preference are printed using a printing device such as an inkjet printer. The inspection device 100 inspects the print quality of the design images printed on the inspection object 300.

The inspection object 300 is not limited to have a disc shape, and can alternatively be rectangular in shape. As far as the inspection object 300 is concerned; a tin badge, a smartphone cover, and an anti-drop grip attached to a smartphone are possible candidates.

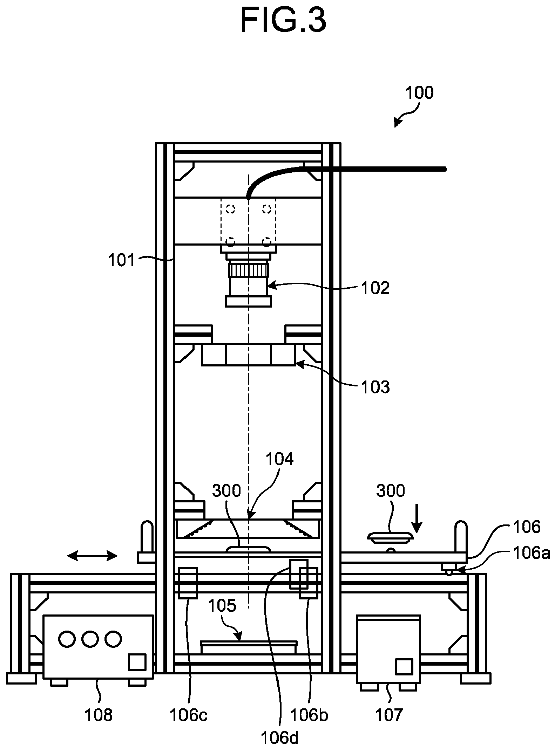

FIG. 3 is a diagram illustrating a configuration of the inspection device 100. As illustrated in FIG. 3, the inspection device 100 includes a main body frame 101 made of an aluminum frame. The main body frame 101 is formed in the shape of a quadrangular prism.

The main body frame 101 includes the following components in the given order from top to bottom in the vertical direction: the imaging device 102; a first ring illumination device 103 representing a first illumination device; a second ring illumination device 104 representing a second illumination device; and a backlight illumination device 105 representing a third illumination device.

In addition, the main body frame 101 includes a slide stage 106 in between the second ring illumination device 104 and the backlight illumination device 105.

The imaging device 102 is a camera in which, for example, a complementary metal oxide semiconductor (CMOS) is used; and which outputs signals according to the projected light. Alternatively, the imaging device 102 can be a camera in which a charge coupled device (CCD) is used.

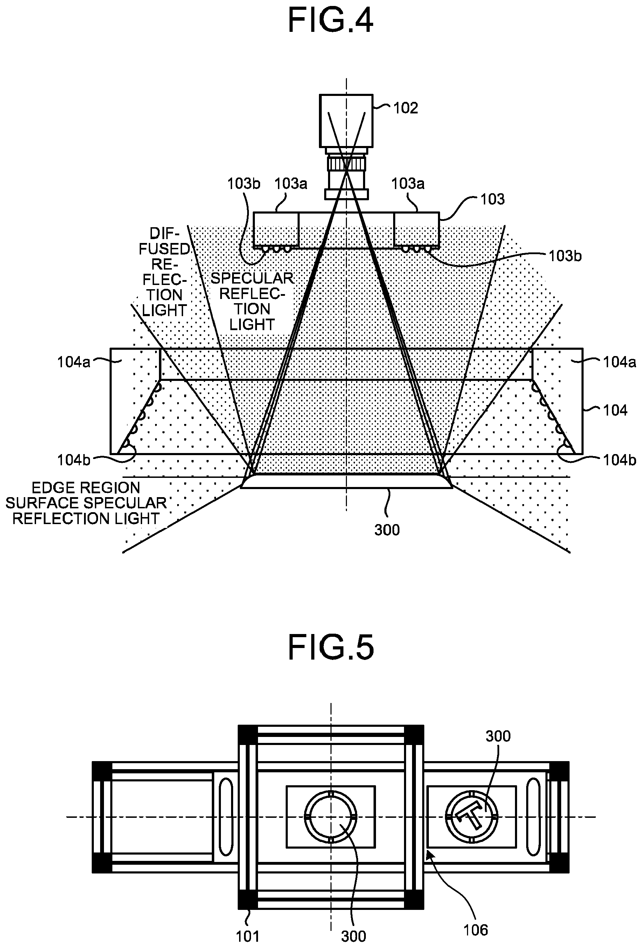

FIG. 4 is a diagram illustrating a layout configuration of the illumination devices.

The first ring illumination device 103 includes a ring-shaped main body 103a representing a first main body. Because of the ring-shaped structure of the main body 103a, the imaging device 102 becomes able to take images of the inspection object 300. In the first ring illumination device 103, on the undersurface of the ring-shaped main body 103a, a number of LEDs 103b representing first-type light sources is installed. The LEDs 103b emit light from above (in the vertical direction) onto the inspection object 300 that is positioned at the imaging position for the imaging device 102.

As illustrated in FIG. 4, on the flat surface 301 of the inspection object 300, the light emitted from the first ring illumination device 103 turns into specular reflection light and diffused reflection light with respect to the imaging device 102. Moreover, on the edge region surface 302 of the inspection object 300, the light emitted from the first ring illumination device 103 turns into diffused reflection light with respect to the imaging device 102.

Meanwhile, although the first ring illumination device 103 includes the ring-shaped main body 103a, that is not the only possible case. Alternatively, for example, the first ring illumination device 103 can have a plurality of fragmented illumination lamps arranged in a ring, or can have a plurality of (for example, four) compact illumination lamps arranged on the left, right, top, and bottom of a circle in the planar view.

The second ring illumination device 104 includes a ring-shaped main body 104a representing a second main body. Because of the ring-shaped structure of the main body 104a, the imaging device 102 becomes able to take images of the inspection object 300. In the second ring illumination device 104, on the inner wall of the ring-shaped main body 104a, a number of LEDs 104b representing light sources are installed. The inner wall of the ring-shaped main body 104a has a tapered shape, with the opening thereof becoming wider from top toward bottom. The LEDs 104b emit light onto the inspection object 300, which is positioned at the imaging position for the imaging device 102, from an oblique direction (for example, at an angle of 30°) with respect to the vertical direction.

As illustrated in FIG. 4, on the flat surface 301 of the inspection object 300, the light emitted from the second ring illumination device 104 turns into specular reflection light and diffused reflection light with respect to the imaging device 102. Moreover, on the edge region surface 302 of the inspection object 300, the light emitted from the second ring illumination device 104 turns into specular reflection light and diffused reflection light with respect to the imaging device 102.

Meanwhile, although the second ring illumination device 104 includes the ring-shaped main body 104a, that is not the only possible case. Alternatively, for example, the second ring illumination device 104 can have a plurality of fragmented illumination lamps arranged in a ring, or can have a plurality of (for example, four) compact illumination lamps arranged on the left, right, top, and bottom of a circle in the planar view.

On the flat surface 301 of the inspection object 300, the light emitted from the backlight illumination device 105 turns into diffused reflection light with respect to the imaging device 102. Moreover, on the edge region surface 302 of the inspection object 300, the light emitted from the backlight illumination device 105 turns into specular reflection light and diffused reflection light with respect to the imaging device 102.

In the present embodiment, the first ring illumination device 103 is made to function as an illumination device for enabling imaging of the edge region surface 302 of the inspection object 300. The second ring illumination device 104 is made to function as an illumination device for enabling imaging of the flat surface 301 of the inspection object 300 (i.e., imaging of the inside of the edge region surface 302). The backlight illumination device 105 is made to function as an illumination device for enabling recognition of the area covered by the inspection object 300.

In the present embodiment, a taken image that is taken by the imaging device 102 when the illumination is provided by the first ring illumination device 103 is synthesized with a taken image that is taken by the imaging device 102 when the illumination is provided by the second ring illumination device 104, and a whole-area image of the inspection object 300 is obtained.

Given below is the explanation about the slide stage 106. The slide stage 106 is a guiding member for guiding the inspection object 300 to the imaging position for the imaging device 102.

FIG. 5 is a diagram illustrating the top view of the slide stage 106. As illustrated in FIG. 5, on the slide stage 106, two inspection objects 300 can be held. The slide stage 106 moves in the horizontal direction according to a slide mechanism, so that the two inspection objects 300 alternately move to the imaging position for the imaging device 102.

As illustrated in FIG. 3, the slide stage 106 includes a ratchet mechanism 106a using which the inspection object 300 is fixed at the imaging position for the imaging device 102.

As illustrated in FIG. 3, the slide stage 106 includes sensors 106b and 106c, which are contactless sensors. When the inspection object 300 on the right-hand side is fixed at the imaging position for the imaging device 102, the sensor 106b is turned ON. On the other hand, when the inspection object on the left-hand side is fixed at the imaging position for the imaging device 102, the sensor 106c is turned ON.

The movements of the slide stage 106 are mitigated by absorbers 106d that are disposed on right and left.

In the present embodiment, the slide stage 106 of the sliding type is used as the guiding member for guiding the inspection object 300 to the imaging position for the imaging device 102. However, that is not the only possible case. Alternatively, for example, a revolver-type guiding member can be used that revolves in order to guide the inspection object 300 to the imaging position for the imaging device 102.

Given below is the explanation about the electrical connections established in the inspection system 1.

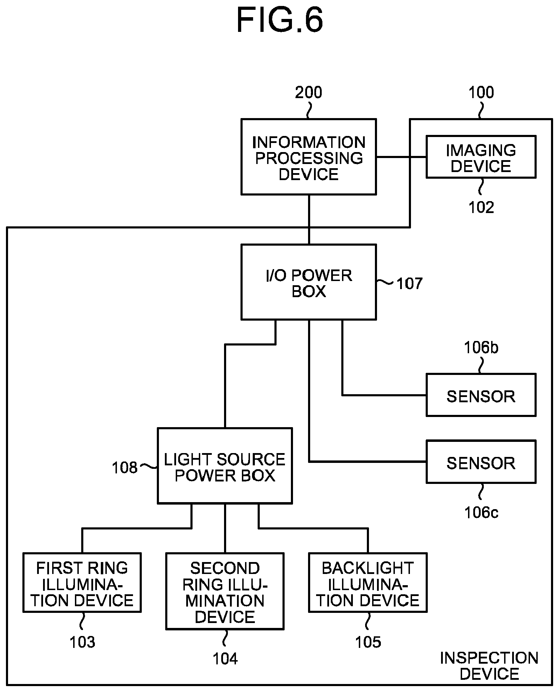

FIG. 6 is a block diagram illustrating the electrical connections established in the inspection system 1. As illustrated in FIG. 6, the inspection device 100 includes an I/O power box 107 and a light source power box 108. The information processing device 200 is connected to the inspection device 100 via the I/O power box 107.

The first ring illumination device 103, the second ring illumination device 104, and the backlight illumination device 105 are connected to the information processing device 200 via the I/O power box 107 and the light source power box 108. The first ring illumination device 103, the second ring illumination device 104, and the backlight illumination device 105 are subjected to LED illumination lighting control and LED illumination lighting power control by the information processing device 200.

The imaging device 102 is directly connected to the information processing device 200, and is controlled by the information processing device 200.

The sensors 106b and 106c in the slide stage 106 are connected to the information processing device 200 via the I/O power box 107. The signal detection regarding the sensors 106b and 106c of the slide stage 106 is performed by the information processing device 200.

Given below is the explanation of a hardware configuration of the information processing device 200.

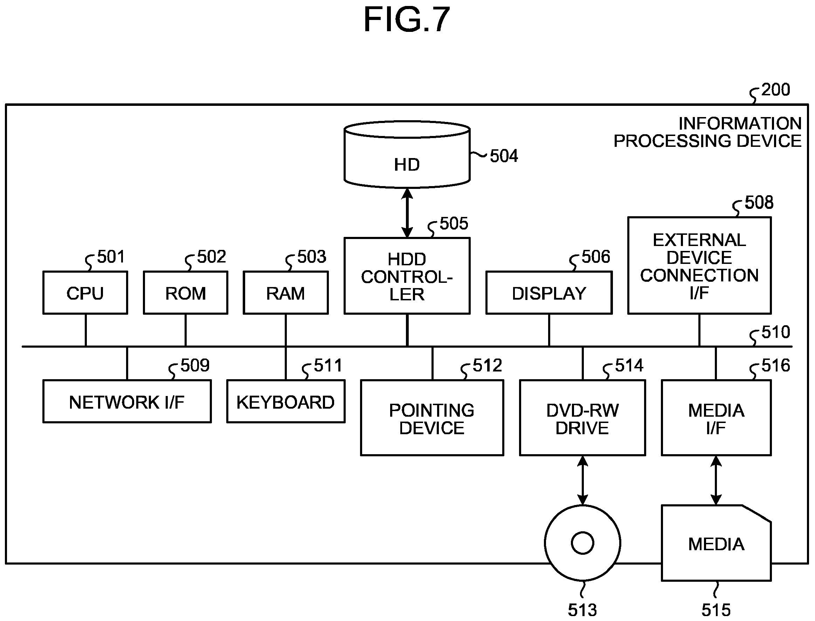

FIG. 7 is a hardware configuration diagram of the information processing device 200.

As illustrated in FIG. 7, the information processing device 200 is built using a computer that includes a central processing unit (CPU) 501, a read only memory (ROM) 502, a random access memory (RAM) 503, a hard disk (HD) 504, an HDD controller 505, a display 506, an external device connection interface (I/F) 508, a network I/F 509, a bus line 510, a keyboard 511, a pointing device 512, a digital versatile disk rewritable (DVD-RW) drive 514, and a media I/F 516 as illustrated in FIG. 7.

Of those constituent elements, the CPU 501 controls the operations of the entire information processing device 200. The ROM 502 is used to store computer programs, such as the IPL, used in the driving of the CPU 501. The RAM 503 is used as the work area of the CPU 501. The HD 504 is used to store a variety of data of computer programs. The HDD controller 505 controls reading of a variety of data from and writing of a variety of data into the HD 504 under the control of the CPU 501. The display 506 displays a variety of information such as a cursor, menus, windows, characters, and images. The external device connection I/F 508 is an interface for establishing connection with various external devices. Examples of an external device includes a universal serial bus (USB) memory or a printer. The network I/F 509 is an interface for performing data communication using a communication network 100. The bus line 510 is an address bus or a data bus meant for electrically connecting the constituent elements, such as the CPU 501, illustrated in FIG. 7.

The keyboard 511 is a type of an input unit that includes a plurality of keys for inputting characters, numerical values, and various instructions. The pointing device 512 is a type of an input unit for selecting or executing various instructions, selecting the processing target, and moving the cursor. The DVD-RW drive 514 controls the reading of a variety of data from and writing of a variety of data into a DVD-RW 513 representing an example of a detachably-attachable recording medium. Meanwhile, instead of using a DVD-RW, a DVD-R can also be used. The media I/F 516 controls the reading of a variety of data from and writing (storing) of a variety of data into a recording media 515 such as a flash memory.

The computer programs executed in the information processing device 200 according to the present embodiment are recorded as installable files or executable files in a computer-readable recording medium such as a compact disk read only memory (CD-ROM), a flexible disk (FD), a compact disk recordable (CD-R), or a digital versatile disk (DVD).

Alternatively, the computer programs executed in the information processing device 200 according to the present embodiment can be stored in a downloadable manner in a computer connected to a network such as the Internet. Still alternatively, the computer programs executed in the information processing device 200 according to the present embodiment can be distributed via a network such as the Internet.

From among a variety of arithmetic processing performed when the CPU 501 of the information processing device 200 executes computer programs, the following explanation is given about the characteristic operations according to the embodiment.

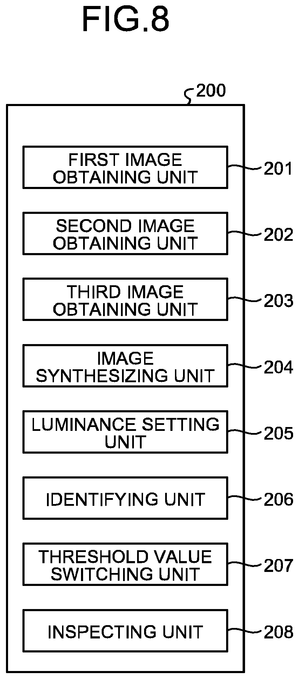

FIG. 8 is a functional block diagram illustrating a functional configuration of the information processing device 200. As illustrated in FIG. 8, the CPU 501 of the information processing device 200 executes computer programs to implement a first image obtaining unit 201, a second image obtaining unit 202, a third image obtaining unit 203, an image synthesizing unit 204, a luminance setting unit 205, an identifying unit 206, a threshold value switching unit 207, and an inspecting unit 208.

The first image obtaining unit 201 obtains, from a taken image that is taken by the imaging device 102 when the light is emitted by the first ring illumination device 103 (i.e., from a diffused-reflection illumination image), an image of the edge region surface 302 of the inspection object 300 as a first target image for inspection of the inspection object.

The second image obtaining unit 202 obtains, from a taken image that is taken by the imaging device 102 when the light is emitted by the second ring illumination device 104 (i.e., from a specular-reflection illumination image), an image of the flat surface 301 excluding the edge region surface 302 of the inspection object 300 as a second target image for inspection of the inspection object.

The third image obtaining unit 203 obtains, from a taken image that is taken by the imaging device 102 when the light is emitted by the backlight illumination device 105 (i.e., from a silhouette image), an image indicating the area covered by the inspection object 300.

The image synthesizing unit 204 synthesizes the following: the image of the edge region surface 302 of the inspection object 300, the image of the flat surface 301 of the inspection object 300, and the image of the area covered by the inspection object 300; and treats that synthetic image as the target image for inspection. Alternatively, the image synthesizing unit 204 can synthesize the image of the edge region surface 302 of the inspection object 300 and the image of the flat surface 301 of the inspection object 300; and treat that synthetic image as the target image for inspection.

The luminance setting unit 205 performs luminance setting of the first ring illumination device 103 and the second ring illumination device 104.

The identifying unit 206 analyzes a master image (a reference image) regarding the inspection object 300, and identifies the presence or absence of a predetermined pattern. The predetermined pattern is, for example, a pattern similar to the shape of the inspection object 300. Alternatively, the predetermined pattern is, for example, a pattern similar to the point symmetry or the line symmetry.

According to the identification result by the identifying unit 206 regarding the identification of the master image, the threshold value switching unit 207 changes the threshold value to be applied when the inspecting unit 208 compares the master image (the reference image) regarding the inspection object 300 with the target image for inspection. The threshold value represents an example of the broader concept such as the determination criterion or the determination condition.

The inspecting unit 208 performs inspection by comparing the master image (the reference image) regarding the inspection object 300 with the target image for inspection. More specifically, in the case of inspecting the print quality of the target image for inspection, the inspecting unit 208 uses a threshold value for determining the off-center of the target image for inspection. If that predetermined threshold value is not satisfied, then the inspecting unit 208 determines that the target image for inspection is defective on account of off-center.

Given below is the explanation of the flow of the characteristic operations from among the operations performed by the information processing device 200 according to the present embodiment.

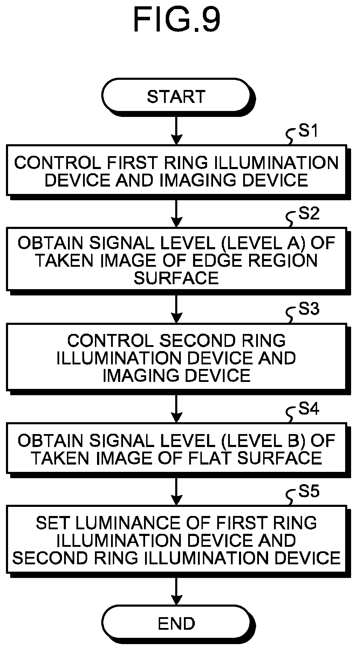

Firstly, the explanation is given about a luminance setting operation performed by the CPU 501 of the information processing device 200 regarding two illumination devices, namely, the first ring illumination device 103 and the second ring illumination device 104. FIG. 9 is a flowchart for explaining an exemplary flow of the luminance setting operation.

In the luminance setting operation, the inspection object 300 in which the flat surface 301 and the edge region surface 302 have the same color (for example, white) is treated as the target.

As illustrated in FIG. 9, the luminance setting unit 205 controls the first ring illumination device 103 and the imaging device 102 (Step S1), and obtains the signal level (level A) of a taken image of the edge region surface 302 that is taken when the inspection object 300 is captured under the illumination by the first ring illumination device 103 (Step S2).

Subsequently, the luminance setting unit 205 controls the second ring illumination device 104 and the imaging device 102 (Step S3), and obtains the signal level (level B) of a taken image of the flat surface 301 that is taken when the inspection object 300 is captured under the illumination by the second ring illumination device 104 (Step S4).

Then, the luminance setting unit 205 sets the luminance of the first ring illumination device 103 and the second ring illumination device 104 in such a way that the level A obtained at Step S2 becomes equal to the level B obtained at Step S4 (Step S5). For example, the luminance setting unit 205 calculates a correction coefficient (level A/level B) of the taken-image signals in such a way that the level A obtained at Step S2 becomes equal to the level B obtained at Step S4. At the time of the actual inspection, the correction coefficient is used in correcting the taken image obtained under the illumination of the second ring illumination device 104.

In the present embodiment, the explanation is given about the luminance setting operation regrading two illumination devices, namely, the first ring illumination device 103 and the second ring illumination device 104. However, that is not the only possible case. That is, it is also possible to adjust the focus of the imaging device 102.

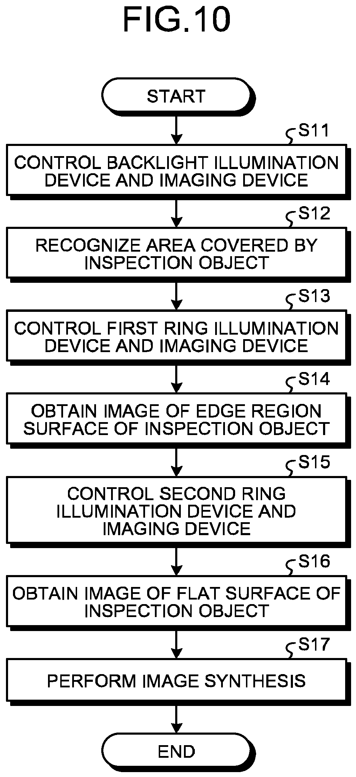

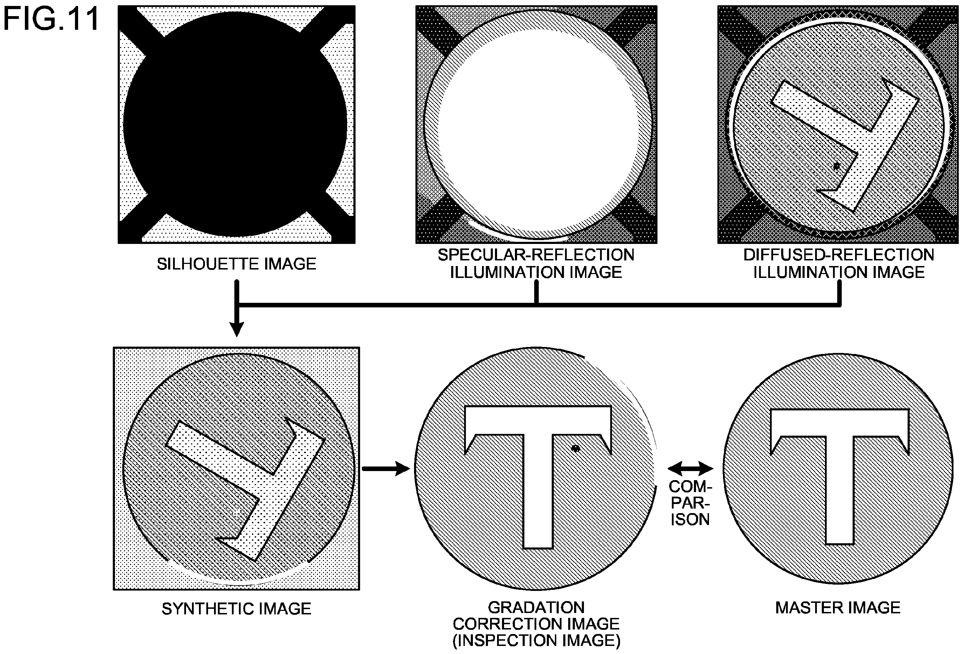

Given below is the explanation of an image synthesis operation performed by the CPU 501 of the information processing device 200. FIG. 10 is a flowchart for explaining the flow of the image synthesis operation. FIG. 11 is a diagram illustrating an example of image synthesis.

As illustrated in FIG. 10, firstly, the third image obtaining unit 203 controls the backlight illumination device 105 and the imaging device 102 (Step S11); and, from the taken image (the silhouette image) of the inspection object 300 that is taken under the illumination by the backlight illumination device 105, recognizes the area covered by the inspection object 300 (Step S12).

More specifically, at Step S12, the third image obtaining unit 203 measures the setting position (x, y) of the inspection object 300; calculates the circular size of the inspection object 300; finalizes the background image region of the inspection object 300; and determines the placement defect of the inspection object 300.

Subsequently, the first image obtaining unit 201 controls the first ring illumination device 103 and the imaging device 102 (Step S13) and, from the taken images of the inspection object 300 that are taken under the illumination of the first ring illumination device 103 (i.e., from the diffused-reflection illumination images), obtains the image of the edge region surface 302 of the inspection object 300 (Step S14).

More specifically, at Step S13, the first image obtaining unit 201 obtains four taken images (diffused-reflection illumination images) of the inspection object 300. Then, at Step S14, the first image obtaining unit 201 performs image averaging based on the four taken images (diffused-reflection illumination images), and then records the image of the edge region surface 302 of the inspection object 300.

Then, the second image obtaining unit 202 controls the second ring illumination device 104 and the imaging device 102 (Step S15) and, from the taken images of the inspection object 300 that are taken under the illumination of the second ring illumination device 104 (i.e., from the specular-reflection illumination images), obtains the image of the flat surface 301 of the inspection object 300 (Step S16) .

More specifically, at Step S15, the second image obtaining unit 202 obtains four taken images (specular-reflection illumination images) of the inspection object 300. Then, at Step S16, the second image obtaining unit 202 performs image averaging based on the four taken images (specular-reflection illumination images) and records the image of the flat surface 301 of the inspection object 300.

Meanwhile, the operations from Step S13 to Step S16 are not limited to be performed in the order explained above in the flowchart. Alternatively, for example, the second image obtaining unit 202 can control the second ring illumination device 104 and the imaging device 102 (Step S15) and obtain the image of the flat surface of the inspection object 300 (Step S16); and then the first image obtaining unit 201 can control the first ring illumination device 103 and the imaging device 102 (Step S13) and obtain the image of the edge region surface 302 of the inspection object 300 (Step S14).

Lastly, the image synthesizing unit 204 synthesizes the following: the area covered by the inspection object 300 as recognized at Step S12, the image of the edge region surface 302 of the inspection object 300 as obtained at Step S14, and the image of the flat surface 301 of the inspection object 300 as obtained at Step S16 (Step S17).

In the image synthesis operation performed at Step S17, the image synthesizing unit 204 performs the following operations: performs pattern matching of the axis centers of the x and y axes; obtains the rotation angle; performs affine conversion of the x-axis center and the y-axis center, and performs resampling. Moreover, in the image synthesis operation performed at Step S17, the image synthesizing unit 204 also performs a gradation correction operation for adding gradation correction to the synthetic image.

The synthetic image that is generated in the manner explained above is treated as the target image for inspection of the inspection object 300 and is compared with the master image for the purpose of, for example, print quality inspection.

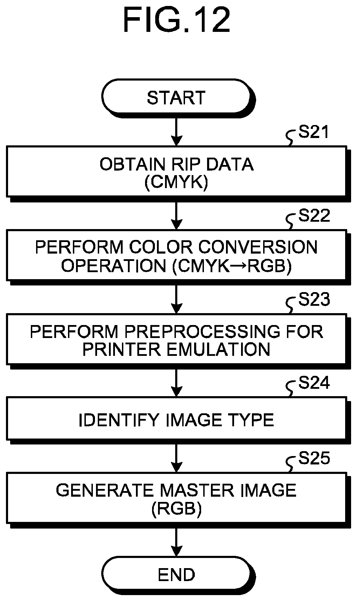

Given below is the explanation of an image type identification operation performed by the CPU 501 of the information processing device 200. FIG. 12 is a flowchart for explaining the flow of the image type identification operation.

As illustrated in FIG. 12, the identifying unit 206 obtains data (CMYK) subjected to raster image processing (RIP) (Step S21), and performs color mode conversion for converting the RIP data from to CMYK to RGB (Step S22).

Then, the identifying unit 206 performs the averaging operation as the preprocessing for printer emulation (Step S23) .

Then, the identifying unit 206 performs the image type identification operation for identifying the image type of the image of the inspection object 300 (Step S24), and generates a master image (Step S25). The reason for which the image type identification operation at Step S24 is required is explained below.

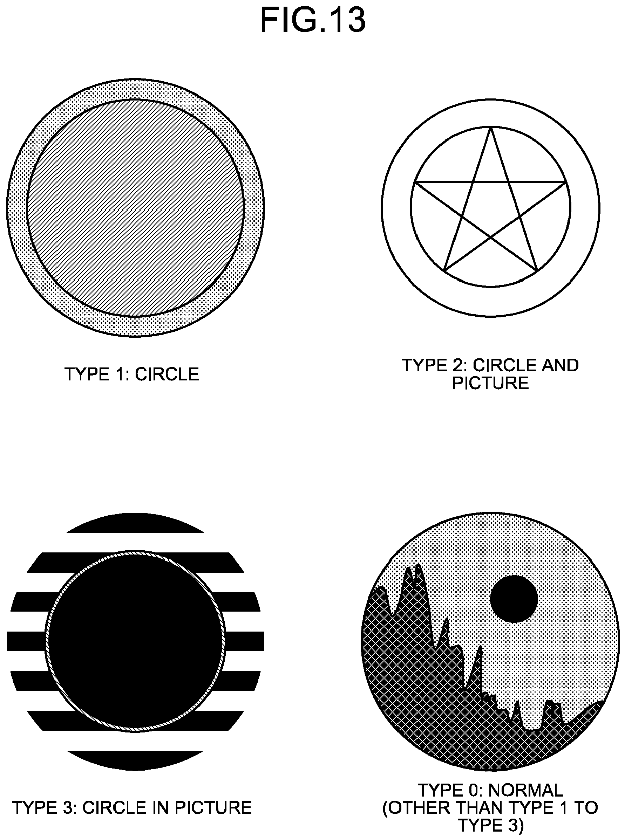

When the print quality of the target image for inspection regarding the inspection object 300 is visually determined by an examiner, the determination threshold value regarding the off-center of the image differs according to the outer periphery/inner periphery of the pictorial pattern. The off-center of an image indicates that the image has shifted from the center. Particularly, regarding a pictorial pattern having circles of the same shape as the disc-shaped inspection object 300, the examiner happens to strictly judge the off-center of the image. For example, FIG. 13 is a diagram illustrating exemplary types of pictorial patterns. As illustrated in FIG. 13, in the disc-shaped inspection object 300, examples of the types of pictorial patterns having circles of the same shape include four types, namely, Type 1 to Type 3 as explained below.

The type Type 0 represents the "normal" type in which a picture is printed over the entire face.

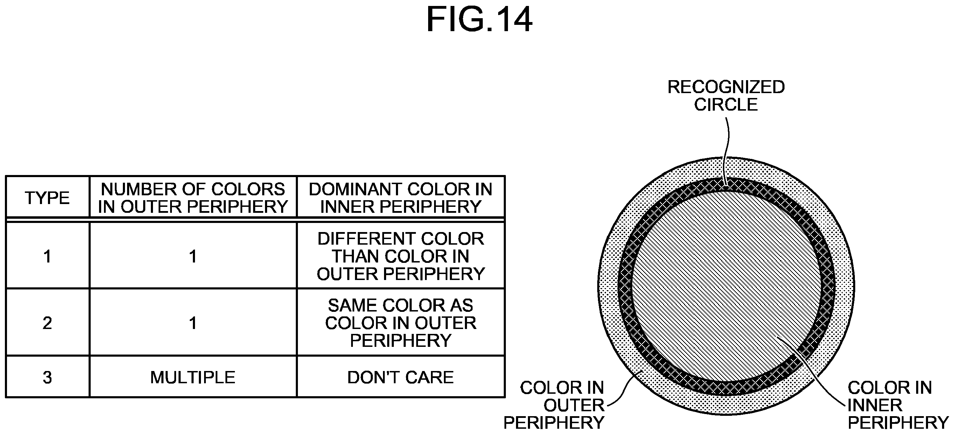

The types from Type 1 to Type 3 differ in the way that, according to the state of the outer periphery/inner periphery of the pictorial pattern, a different determination threshold value is used for inspecting the print quality of the target image for inspection. FIG. 14 is a diagram illustrating the pictorial patterns based on the outer periphery/inner periphery. As illustrated in FIG. 14, as the criteria about the types from Type 1 to Type 3, the number of colors in the outer periphery of the pictorial pattern and the dominant color in the inner periphery can be considered.

The type Type 1 is of the "circle" type in which a circle is present close to the outer periphery and a solid area is present. As illustrated in FIG. 14, in the type Type 1, the outer periphery has a single color and the inner periphery has a different color than the outer periphery.

The type Type 2 is of the "circle and picture" type in which a circle is present close to the outer periphery but a solid area is absent. As illustrated in FIG. 14, in the type Type 2, the outer periphery has a single color and inner periphery too has the same color as the outer periphery.

The type Type 3 is of the "circle in picture" type in which a circle is present in a picture printed over the entire face. As illustrated in FIG. 14, in the type Type 3, the outer periphery has a plurality of colors and the inner periphery has a different color than the outer periphery. Meanwhile, the types Type 2 and Type 3 can be varied by the ratio of the solid amount.

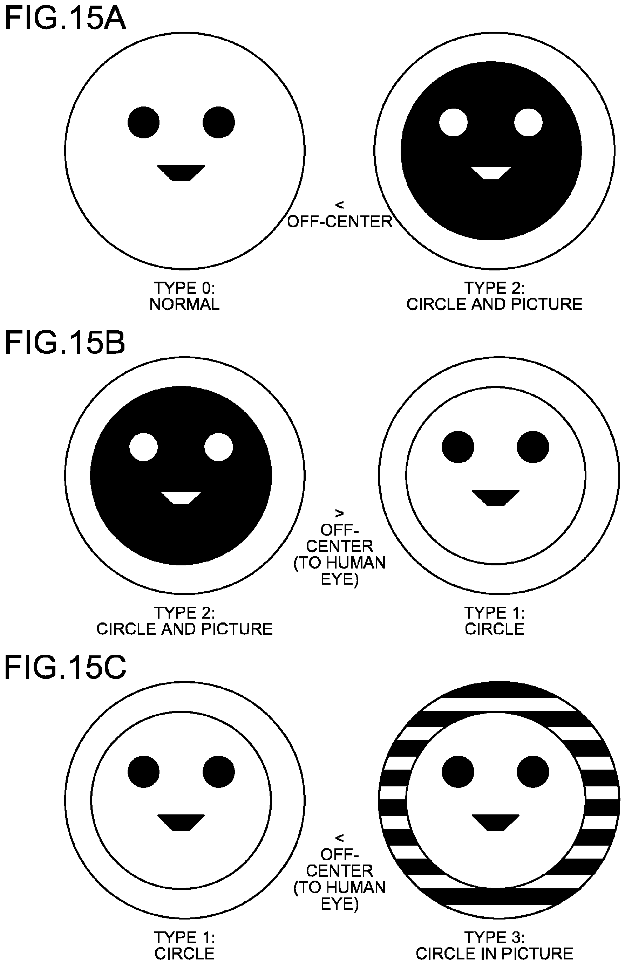

As the print quality of the target image for inspection, in the case of visually determining the off-center, the examiner compares the width of the outer periphery color of the target image for inspection according to the positions of the line/point symmetry, and determines whether the widths of the outer shape of the line/point symmetry positions are identical (the horizontal positions, the vertical positions, or the diagonal positions). FIGS. 15A to 15C are diagrams illustrating the level of difficulty of comparing the widths. As the comparison of the widths is simpler, stricter inspection is required. As illustrated in FIG. 15A, in the type Type 0, the comparison of the widths is more difficult than in the type Type 2. As illustrated in FIG. 15B, in the type Type 2, the comparison of the widths is more difficult than in the type Type 1. As illustrated in FIG. 15C, in the type Type 3, the comparison of the widths is more difficult than in the type Type 1.

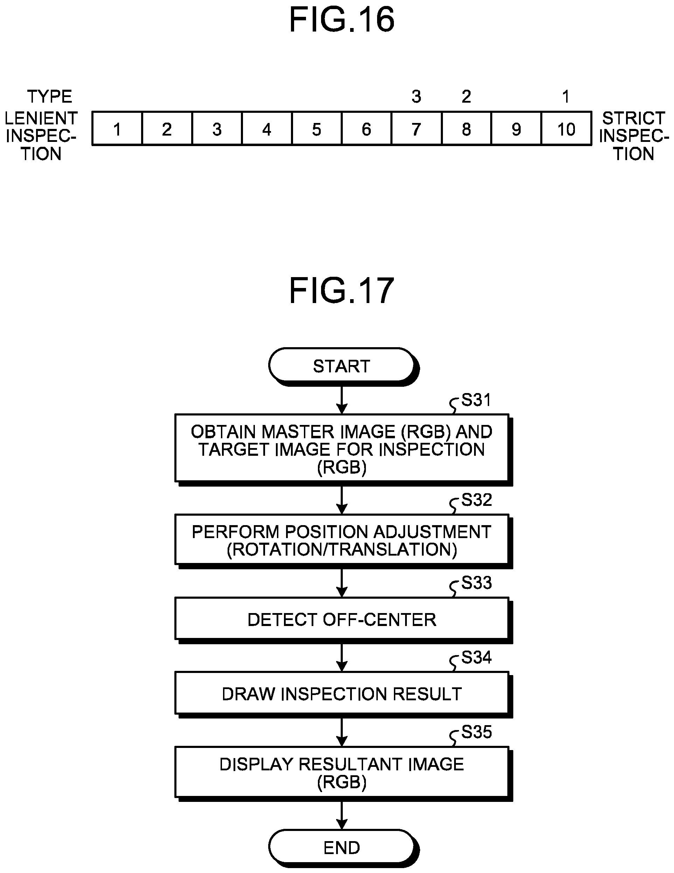

FIG. 16 is a diagram illustrating an example of the determination threshold values in the case of inspecting the off-center as the print quality of the target image for inspection. As explained above, regarding the pictorial pattern of the type Type 1, since the comparison of the widths of the outer periphery color of the target image for inspection is easy to perform for the examiner, it becomes necessary to perform stricter inspection than in the case of inspecting the pictorial pattern of the type Type 2 or Type 3. Regarding the pictorial pattern of the type Type 2, it becomes necessary to perform stricter inspection than the pictorial pattern of the type Type 3.

In that regard, in the present embodiment, the pictorial pattern of the inspection object 300 is identified, and the off-center inspection is performed according to the method suitable to the pattern type (normal/circle/circle and picture/circle in picture).

Given below is the explanation about the inspection operation based on image comparison as performed by the CPU 501 of the information processing device 200. FIG. 17 is a flowchart for explaining the flow of the inspection operation based on image comparison.

As illustrated in FIG. 17, the inspecting unit 208 obtains the master image (RGB) and the target image for inspection (RGB) (Step S31), and performs position adjustment by rotating or translating the master image and the target image for inspection (Step S32).

Then, the inspecting unit 208 compares the master image with the target image for inspection, and performs inspection for detecting off-center (Step S33). Herein, according to the identification result by the identifying unit 206 regarding the image type of the master image, the threshold value switching unit 207 changes the threshold value to be applied at the time of comparing the master image regarding the inspection object 300 and the target image for inspection.

More specifically, according to the equation given below, the threshold value switching unit 207 obtains a threshold value (Th) for each image type from a threshold value ($Th_{Normal}$) for misalignment allowance as specified in advance by the user.

$$Th = C_{Type} \times Th_{Normal}$$

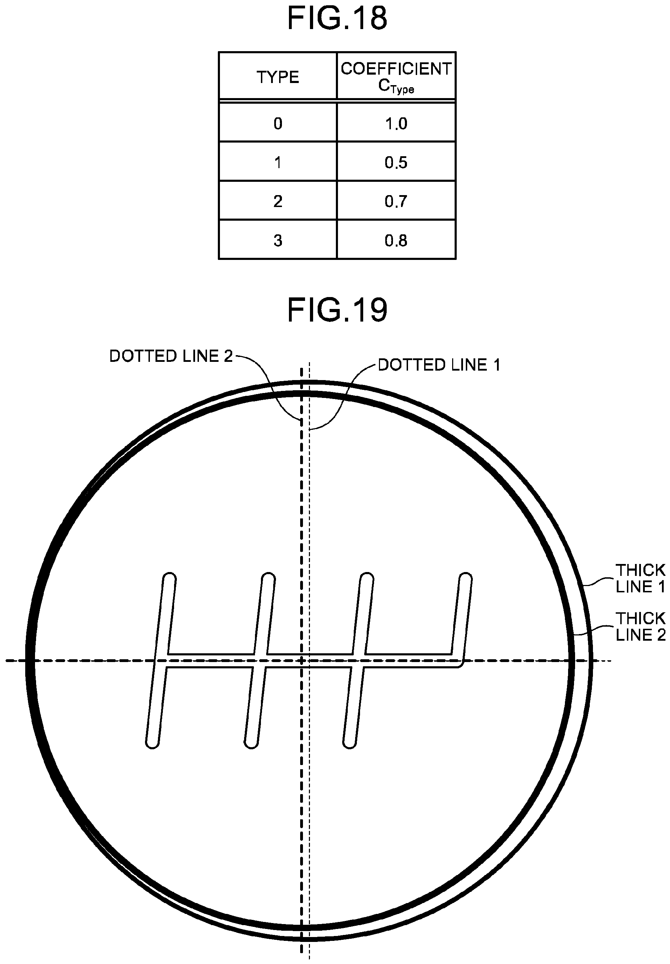

The threshold value switching unit 207 calculates a coefficient $C_{Type}$ according to the image type of the master image as identified by the identifying unit 206. FIG. 18 is a diagram illustrating examples of the coefficient $C_{Type}$ corresponding to the image types. As illustrated in FIG. 18, the threshold value switching unit 207 obtains the coefficient $C_{Type}$ according to the image type. The coefficient $C_{Type}$ is smaller for the image type requiring stricter inspection. Thus, the threshold value (Th) is smaller for the image type requiring stricter inspection.

Subsequently, the inspecting unit 208 draws the inspection result indicating the detected off-center (Step S34).

FIG. 19 is a diagram illustrating an example of the inspection result indicating the detected off-center. As illustrated in FIG. 19, the inspecting unit 208 displays, in the display 506, an image in which the misalignment is drawn in a round shape as the inspection result. As illustrated in FIG. 19, the inspecting unit 208 displays a thick line 1 and a thick line 2 in an overlapping manner; where the thick line 1 represents, as the information detected from the master image, the outer shape (edge) of the inspection object 300, and the thick line 2 represents, as the information obtained from the result of comparison between the master image and the target image for inspection, the outer periphery (edge) of the target image for inspection that is shifted by the off-center. Moreover, the inspecting unit 208 displays a dotted line 1 and a dotted line 2 in an overlapping manner; where the dotted line 1 represents the center of the inspection object 300, and the dotted line 2 represents the center of the target image for inspection that is shifted by the off-center.

In the present embodiment, the outer shape (edge) of the inspection object 300 representing the information detected from the master image is displayed in an overlapping manner with the outer periphery (edge) of the target image for inspection, which is shifted by the off-center, representing the information obtained from the result of comparison between the master image and the target image for inspection. However, that is not the only possible case. Alternatively, the center of the outer shape of the inspection object 300 representing the information detected from the master image can be displayed in an overlapping manner with the center of the outer periphery of the target image for inspection, which is shifted by the off-center, representing the information obtained from the result of comparison between the master image and the target image for inspection.

As a result of displaying both pieces of information in an overlapping manner, the result of off-center can be illustrated in an easy-to-understand manner, thereby making it possible to display the misalignment during printing in an easy-to-understand manner.

Lastly, based on the inspection result indicating the detected off-center, the inspecting unit 208 displays, in the display 506, whether or not the misalignment of the target image for inspection is allowed (Step S35). That marks the end of the operations.

In this way, according to the present embodiment, as a result of analyzing the master image (reference image) to be printed, the presence or absence of a predetermined pattern (a pattern (for example, a circular pattern) similar to the shape of the inspection object 300 (for example, a circular medium)) is identified and, according to the identification result, a change is made in the threshold value to be used by the inspecting unit 208 for comparing the master image (reference image) and the target image for inspection. As a result, the sensitivity of the misalignment inspection at the time of printing is appropriately changed by taking into account the impact of the print pattern of the inspection object 300. Hence, even when there are a number of design variations of the inspection object, the inspection can be performed in an efficient manner while reducing the burden on the examiner.

According to the present embodiment, the explanation is given about an example of printing a pattern similar to the circular inspection object 300 (for example, printing a pictorial pattern having a circular pattern). However, that is not the only possible case. Alternatively, it is possible to print a pattern similar to a polygonal inspection object 300 (for example, a pictorial pattern having a polygonal pattern). Moreover, the pictorial pattern need not be similar to the shape of the inspection object 300. For example, it is also possible to have a case in which a pictorial pattern having a polygonal pattern is printed on a circular inspection object 300. Furthermore, even in the case in which the pictorial pattern is bilaterally symmetrical/vertically symmetrical, the same operations can be performed.

In addition, the inspecting unit 208 analyzes whether or not the submitted design (RIP) complies with the print guidelines that represent the required conditions for image printing set in advance, and make notification of the analysis result. The print guidelines represent the conditions that should be satisfied or that cannot be violated by the source data for printing, and are defined separately for each print target or each service. For example, as the print guidelines, it is possible to think of the following guidelines: the design should be larger than the outer periphery of the print area, and the color and the design cannot be changed around the outer periphery of the print area.

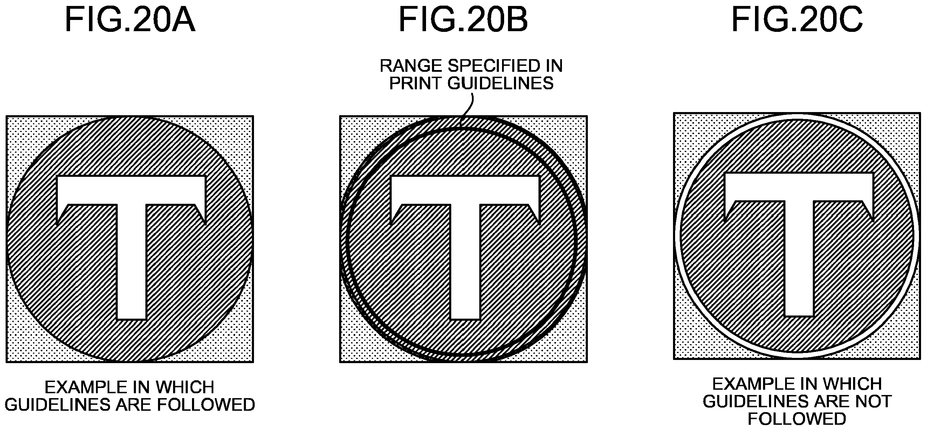

FIGS. 20A to 20B are diagrams illustrating a compliance example and a noncompliance example in the case in which a print guideline indicates that the design should be larger than the outer periphery of the print area. As illustrated in FIG. 20B, as a print guideline (the range of print area), a slightly greater size than the print area of the inspection object 300 is demanded. As illustrated in the example in FIG. 20A in which the print guideline is followed, it serves the purpose when the image covers the specified range. However, as illustrated in the example in FIG. 20C in which the print guideline is not followed, if the size of the image (design) is small (in this case, just about covering the print area of the inspection object 300), then unprinted portions become visible at the ends of the inspection object 300.

Thus, regarding the submitted design (RIP) that is submitted by the user, the inspecting unit 208 determines whether or not the print guidelines are followed. If the print guidelines are not followed, then the inspecting unit 208 either notifies the user about the same or proposes a corrected design that follows the print guidelines. As a result, it becomes possible to reduce the occurrence of printing failure by reducing the instances of printing images that violate the print guidelines.

Meanwhile, when the submitted design (RIP) is either same as or smaller than the range of the print area, the off-center becomes easy to occur. Hence, it becomes necessary to notify the user about creating a pictorial pattern that is larger than the range of the print area.

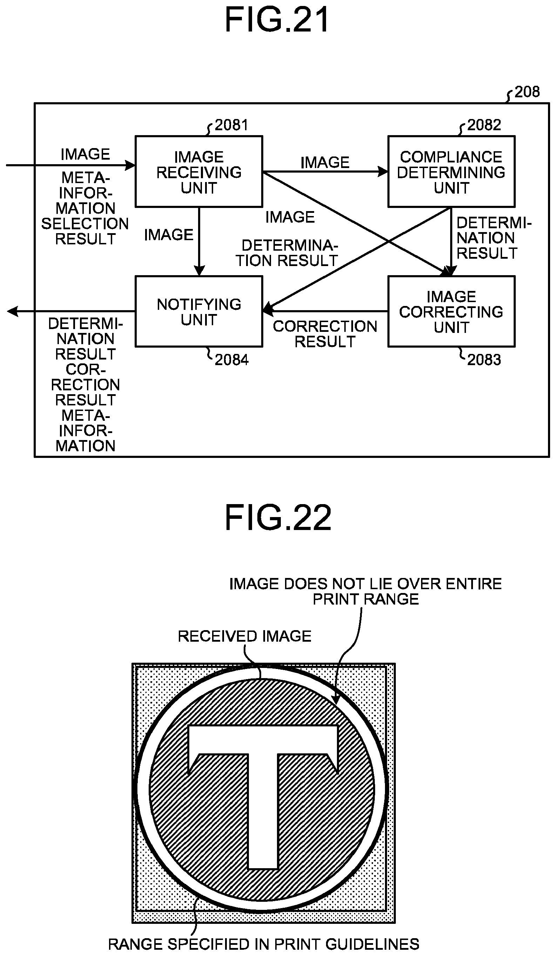

FIG. 21 is a functional block diagram illustrating a functional configuration involved in the compliance determination performed by the inspecting unit 208 regarding the print guidelines. As illustrated in FIG. 21, as the functional configuration involved in the compliance determination regarding the print guidelines, the inspecting unit 208 includes an image receiving unit 2081, a compliance determining unit 2082, an image correcting unit 2083, and a notifying unit 2084.

The image receiving unit 2081 functions as a receiving unit. The image receiving unit 2081 receives an image representing the submitted design (RIP) that is submitted by the user, and receives the selection result of metainformation (explained later). Then, the image receiving unit 2081 outputs the received image to the compliance determining unit 2082, the image correcting unit 2083, and the notifying unit 2084.

The compliance determining unit 2082 functions as a determining unit. The compliance determining unit 2082 receives input of the image that is output from the image receiving unit 2081. Then, the compliance determining unit 2082 determines whether the image received by the image receiving unit 2081 complies with the print guidelines. Subsequently, the compliance determining unit 2082 outputs the determination result to the image correcting unit 2083 and the notifying unit 2084.

For example, the compliance determining unit 2082 compares the size of the submitted design (image) with the size specified in the print guidelines, and determines whether or not the submitted design (image) complies with the print guidelines (a first compliance determination method). FIG. 22 is a diagram illustrating an example of the first compliance determination method. As illustrated in FIG. 22, according to the size of the submitted design (image), the compliance determining unit 2082 determines whether or not the image lies over the range specified in the print guidelines. If it is detected that the submitted design (image) is smaller than the range specified in the print guidelines, then the compliance determining unit 2082 determines that the submitted design does not comply with the print guidelines.

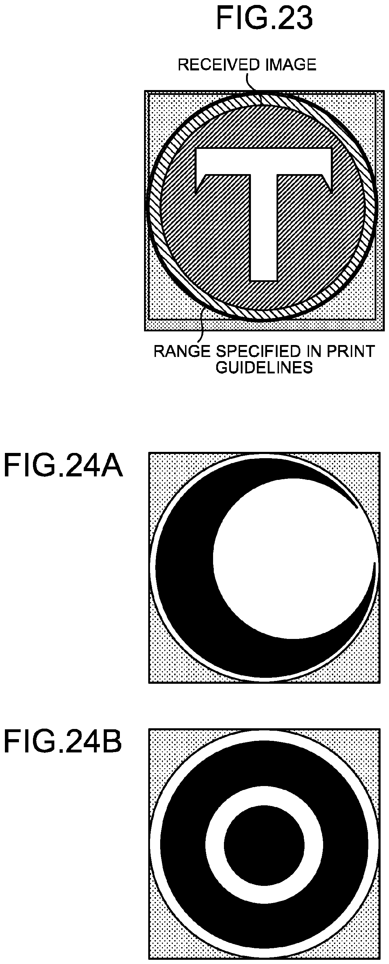

For example, depending on whether or not the color is constant at the edge of the print range of the inspection object 300, the compliance determining unit 2082 determines whether or not the submitted design (image) complies with the print guidelines (a second compliance determination method). FIG. 23 is a diagram illustrating an example of the second compliance determination method. As illustrated in FIG. 23, if it is detected during the image processing that there is a change in color at the edge of the print range of the inspection object 300, then the compliance determining unit 2082 determines that the submitted design (image) does not comply with the print guidelines.

FIGS. 24A and 24B are diagrams that illustrate an example of the second compliance determination method. Regarding a submitted design in which the color appears to have changed at the edge of the print area covered by the inspection object 300 as illustrated in FIG.

24A as well as regarding a submitted design in which the color appears to have changed slightly on the outside of the print area covered by the inspection object 300 as illustrated in FIG. 24B, the compliance determining unit 2082 determines that the submitted design does not comply with the print guidelines. In such cases, the compliance determining unit 2082 determines whether or not the color is constant according to, for example, the luminance or the magnitude of color dispersion in the pixels close to the print range of the inspection object 300.

Meanwhile, when the outer shape of the print target (the inspection target) is similar to the design of the printed image, as illustrated in the types from Type 1 to Type 3 in FIG. 13; the level of difficulty of the inspection goes up. Hence, when a design similar to the outer shape of the inspection object 300 is present in the print image, the compliance determining unit 2082 determines that the print image does not comply with the print guidelines. In that case, the compliance determining unit 2082 recognizes the outer shape according to a method of binarization using the representative color or a method of using a difference filter, and performs similarity determination by comparing the degrees of similarity.

Moreover, for example, the compliance determining unit 2082 performs determination using machine learning (a convolutional neural network (CNN)) that is trained to distinguish between an image complying with the print guidelines and an image not complying with the print guidelines (a third compliance determination method).

The image correcting unit 2083 functions as a correcting unit. The image correcting unit 2083 receives input of the image output from the image receiving unit 2081 and receives input of the determination result output from the compliance determining unit 2082. If the compliance determining unit 2082 determines noncompliance, then the image correcting unit 2083 corrects the image received by the image receiving unit 2081. Then, the image correcting unit 2083 outputs the correction result to the notifying unit 2084.

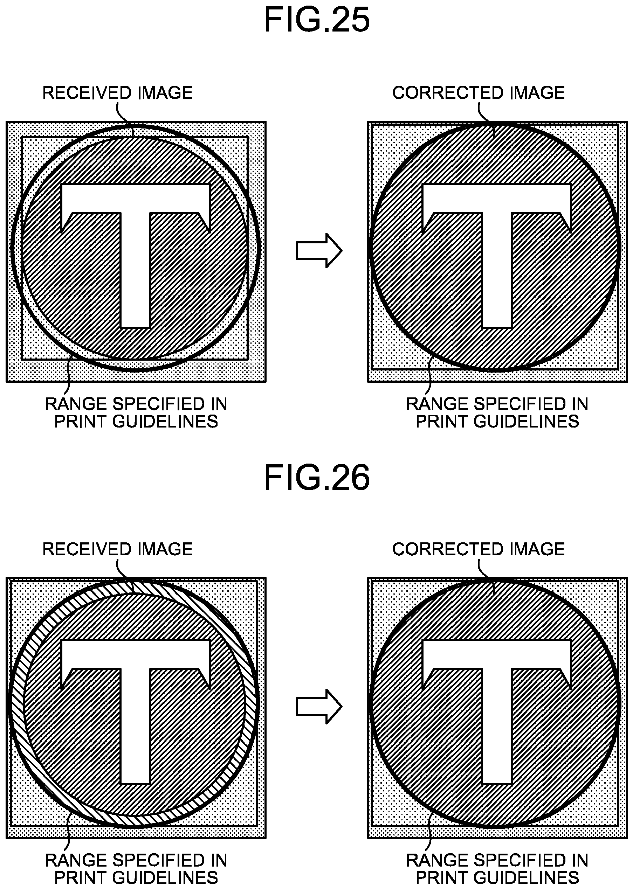

For example, the image correcting unit 2083 performs variable magnification of the size of the submitted design (image), which is submitted by the user, so that the design (image) complies with the print guidelines (a first image correction method). FIG. 25 is a diagram illustrating an example of the first image correction method. As illustrated in FIG. 25, if the submitted design (image) is smaller than the range specified in the print guidelines, the image correcting unit 2083 magnifies the submitted design (image) to comply with the print guidelines.

Alternatively, for example, the image correcting unit 2083 corrects the color of some part of the submitted design (image), which is input from the user, so that the design (image) complies with the print guidelines (a second image correction method). FIG. 26 is a diagram illustrating an example of the second image correction method. As illustrated in FIG. 26, if the submitted design (image) has a change in color at the edge of the print range of the inspection object 300, then the image correcting unit 2083 performs color conversion at the edge of the print range so that the design (image) complies with the print guidelines.

Still alternatively, for example, the image correcting unit 2083 performs correction using machine learning (a convolutional neural network (CNN)) trained to convert an image not complying with the print guidelines to comply with the print guidelines, or performs correction using a generative adversarial network (a third image correction method).

Still alternatively, for example, the image correcting unit 2083 translates, partially or entirely, the submitted design (image), which is submitted by the user, to comply with the print guidelines (a fourth image correction method).

For example, depending on whether or not the design (image) is in the middle of the image, sometimes there is a change in the criteria for detecting printing mismatch. In that case, it becomes difficult to maintain a uniform inspection quality, or the image inspection operation becomes complex. In that regard, for example, placing the design (image) at the center of the image can be considered as a condition in the print guidelines. In that case, the image correcting unit 2083 performs correction by translating, partially or entirely, the image and placing the design in the middle of the image, to comply with the print guidelines.

The notifying unit 2084 functions as a notifying unit. The notifying unit 2084 receives input of the following: the image output from the image receiving unit 2081, the determination result output from the compliance determining unit 2082, and the correction result output from the image correcting unit 2083. Then, the notifying unit 2084 notifies the user about the determination result by the compliance determining unit 2082 or about the correction result by the image correcting unit 2083. Moreover, the notifying unit 2084 notifies the user about the metainformation that enables the user to make selection.

Given below is an example of the notification made by the notifying unit 2084.

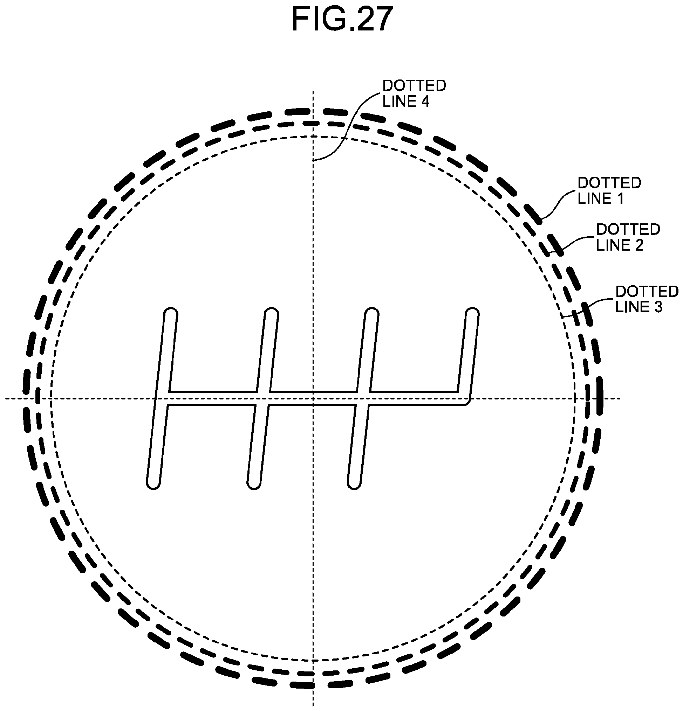

FIG. 27 is a diagram illustrating an example of notification by the notifying unit 2084. As illustrated in FIG. 27, with respect to the outer periphery (edge) of the pictorial pattern of the inspection object 300 representing the information detected from the master image, the notifying unit 2084 displays, in the display 506, the print guidelines (the outer shape of the inspection object 300 (a dotted line 1), the position of zero misalignment (a dotted line 2), and the outer periphery (edge) of the pictorial pattern of the inspection object 300 (a dotted line 3)) in an overlapping manner. Moreover, the notifying unit 2084 also displays, in the display 506, a dotted line 4 representing the center of the outer shape of the inspection object 300 as the information detected from the master image.

Moreover, when an image does not comply with the print guidelines, the notifying unit 2084 displays "not complying with guidelines" in the display 506.

Alternatively, when an image does not comply with the print guidelines, the notifying unit 2084 can output the fact that the submitted design (image), which is submitted by the user, is "not complying with the guidelines" in a result file (a log file).

The print guidelines (the center of the print area) indicate the center of the print area. Thus, when the center of the pictorial pattern of the inspection object 300 as detected from the master image is not in alignment with the print guidelines (the center of the print area), the examiner understands that the pictorial pattern of the inspection object 300 is misaligned and not appropriate. Moreover, even if a design is originally not in alignment with the center, when the center of the print area is indicated, the examiner becomes able to correctly determine, without getting affected by the misalignment of the design, that either the pictorial pattern of the inspection object 300 is misaligned and not appropriate or the pictorial pattern of the inspection object 300 is not appropriate.

According to the present embodiment, as a result of illustrating the print guidelines in an overlapping manner on the master image (reference data), the problems in the master image (reference data) (for example, the print area being small and not appropriate, or the center of the print area being misaligned) can be illustrated in an easy-to-understand manner. Thus, the operator can look at the display to confirm the design, and determine whether or not reprinting is necessary.

Meanwhile, according to the present embodiment, the inspecting unit 208 of the information processing device 200 is equipped with the function of determining the compliance of the print guidelines. However, that is not the only possible case. Alternatively, for example, the function of determining the compliance of the print guidelines can be implemented in a web application/order software that is a computer program used in an information processing terminal such as a personal computer or a handheld terminal of the user (designer). In that case, the information processing terminal such as a personal computer or a handheld terminal of the user (designer) functions as the image inspection device.

When the function of determining the compliance of the print guidelines is implemented in a web application/order software used in an information processing terminal of the user; as soon as the user uploads a design (image), the compliance determining unit 2082 determines whether or not the uploaded design (image) complies with the print guidelines. If it is determined that the design does not comply with the print guidelines, then the notifying unit 2084 notifies the user about that fact. Moreover, the image correcting unit 2083 corrects the uploaded design (image), and presents a correction proposal via the notifying unit 2084.

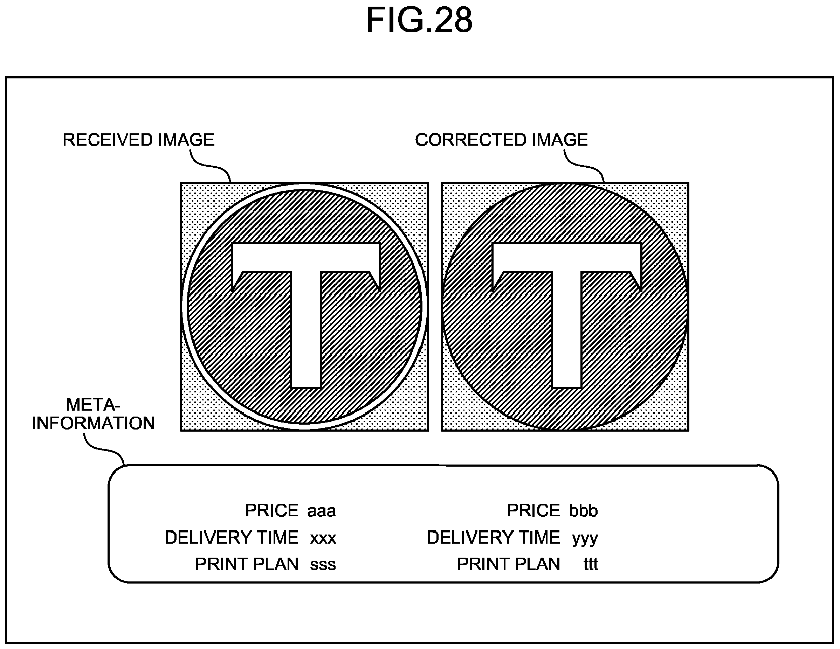

FIG. 28 is a diagram illustrating an example of the notification made by the notifying unit 2084. In the exemplary notification illustrated in FIG. 28, the notifying unit 2084 displays the fact that the uploaded design (image) does not comply with the print guidelines as well as displays the uploaded design (image) and the corrected image side by side. In addition, in the exemplary notification illustrated in FIG. 28, the notifying unit 2084 presents the following information as metainformation: the printing fees in the case of no image correction and in the case of image correction; the print plan; and the delivery time.

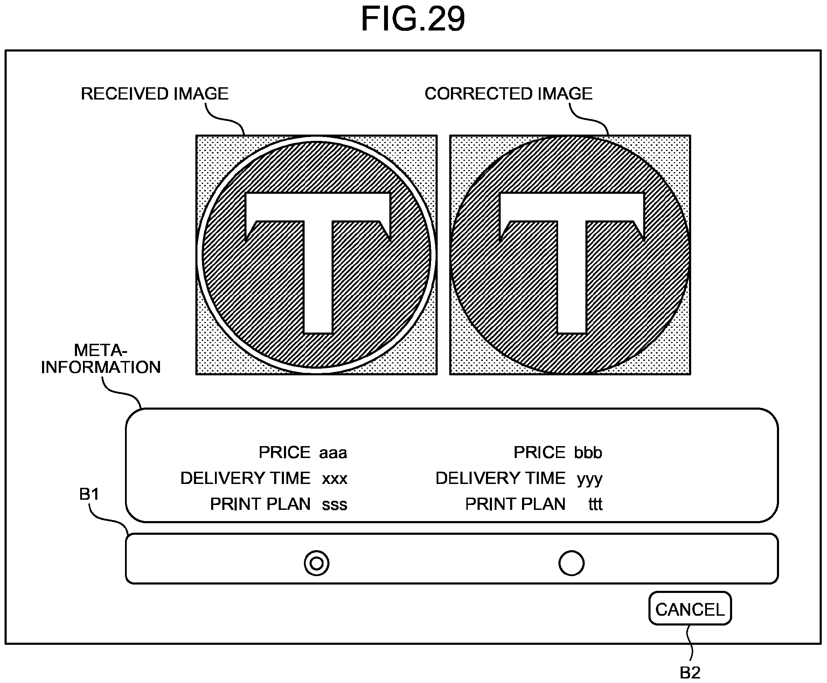

FIG. 29 is a diagram illustrating another exemplary notification by the notifying unit 2084. In the exemplary notification illustrated in FIG. 29, in addition to the information displayed in the exemplary notification illustrated in FIG. 28, the notifying unit 2084 displays a radio button B1 for receiving the selection of the image for printing from among the uploaded design (image) and the corrected image. The image receiving unit 2081 receives the image for printing, which is selected using the radio button B1, as the image representing the submitted design (RIP). Moreover, the image receiving unit 2081 receives the selection result about the metainformation (the printing fees, the print plan, and the delivery time) regarding the image for printing that is selected using the radio button B1. In the present embodiment, although the radio button B1 is used, that is not the only possible case. Moreover, a slide bar or a stepper can be used for enabling specification of the quantity.

That is, in order to deal with the case in which printing needs to be performed even if the print guidelines are violated, the images violating the print guidelines can also be printed if specified by the user or the examiner. The radio button B1 illustrated in FIG. 29 is meant for receiving selection of the image for printing. Even if the image submitted by the user is determined to violate the print guidelines, when that image is selected using the radio button B1, the image receiving unit 2081 can print it in spite of the violation of the print guidelines.

Meanwhile, as a result of providing a slide bar, the number of print copies of the received image and the corrected image can be specified in the image receiving unit 2081.

Moreover, the image receiving unit 2081 includes a cancel button B2 for receiving print cancellation. Thus, when the cancel button B2 is pressed, the printing can be cancelled.

In this way, according to the present embodiment, after a design (image) is uploaded, it is determined whether or not that design (image) complies with the print guidelines, and the determination result is notified to the user or the examiner. Moreover, a correction image obtained by correcting the uploaded design (image) to comply with the print guidelines is presented to the user while prompting the user to make changes. Then, the inspection system either receives the design (image) that has been changed by the user to comply with the print guidelines, or receives an instruction to print the corrected image that was presented. Thus, the designs (images) not complying with the print guidelines can be detected/corrected, and the occurrence of printing failure can be reduced by reducing the instances of printing images that violate the print guidelines representing the required conditions for image printing.

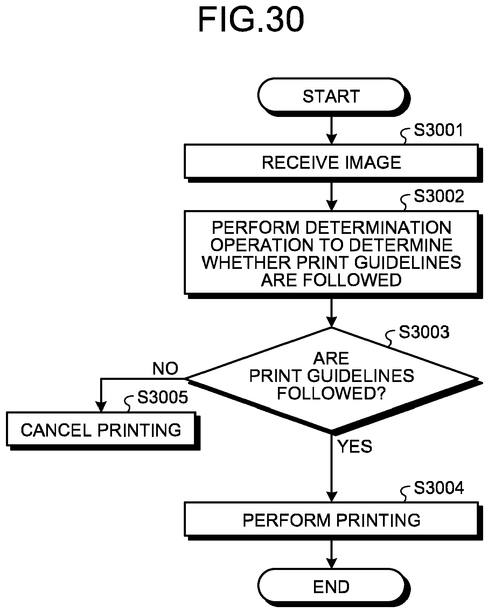

The information processing device 200 that functions as the image inspection device can be installed in an image forming device that includes an image forming unit. That is, it is possible to think of an image forming device that uses partially or entirely the functional configuration of the inspecting unit 208 that is related to the compliance determination of the print guidelines as illustrated in FIG. 21. Explained below with reference to FIGS. 30 to 33 are modification examples of the image forming device that has the functions of the inspecting unit 208 related to the compliance determination of the print guidelines.

First modification example

FIG. 30 is a flowchart for explaining an exemplary flow of the operations performed by the inspecting unit 208 included in the image forming device according to a first modification example. In FIG. 30 is illustrated the flow of operations performed using the image receiving unit 2081 and the compliance determining unit 2082 of the inspecting unit 208.

Firstly, at Step S3001, the image receiving unit 2081 receives an image. In a web application/order software, the uploading of an image designed by the user is received. In an image forming device, an image for printing is received.

Then, at Step S3002, the compliance determining unit 2082 performs the compliance determination operation for determining whether the image received by the image receiving unit 2081 complies with the print guidelines.

Subsequently, at Step S3003, the compliance determining unit 2082 diverges according to the determination result.

If it is determined that the image complies with the print guidelines (Yes at Step S3003), then the system control proceeds to Step S3004 at which the inspecting unit 208 makes the image forming unit of the image forming device print the image determined to comply with the print guidelines. On the other hand, if it is determined that the image does not comply with the print guidelines (No at Step S3003), then the system control proceeds to Step S3005 at which the inspecting unit 208 cancels the printing to be performed by the image forming unit of the image forming device.

Second modification example

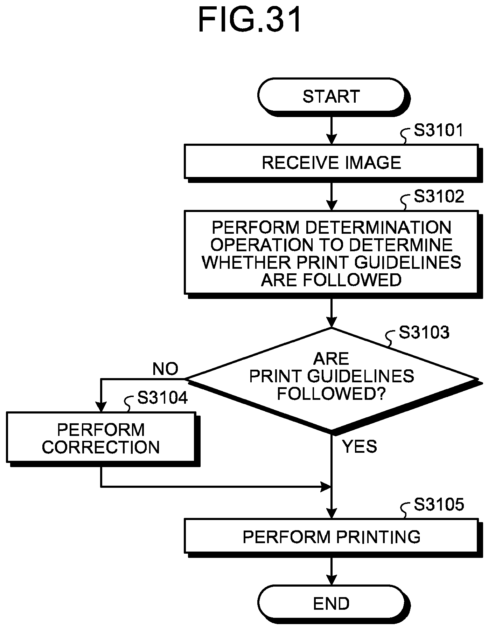

FIG. 31 is a flowchart for explaining an exemplary flow of operations performed by the inspecting unit 208 included in the image processing device according to a second modification example. In FIG. 31 is illustrated the flow of operations performed using the receiving unit 2081, the compliance determining unit 2082, and the correcting unit 2083 included in the inspecting unit 208.

Firstly, at Step S3101, the image receiving unit 2081 receives an image. In a web application/order software, the uploading of an image designed by the user is received. In an image forming device, an image for printing is received.

Then, at Step S3102, the compliance determining unit 2082 performs the compliance determination operation for determining whether the image received by the image receiving unit 2081 complies with the print guidelines.

Subsequently, at Step S3103, the compliance determining unit 2082 diverges according to the determination result.

If it is determined that the image complies with the print guidelines (Yes at Step S3103), then the system control proceeds to Step S3105 at which the inspecting unit 208 makes the image forming unit of the image forming device print the image determined to comply with the print guidelines.

On the other hand, if it is determined that the image does not comply with the print guidelines (No at Step S3103), then the system control proceeds to Step S3104 at which the correcting unit 2083 performs the correction operation for correcting the image received at the image receiving unit 2081. Then, the system control proceeds to Step S3105 at which the inspecting unit 208 makes the image forming unit of the image forming device print the image corrected by the correcting unit 2083.

Third modification example

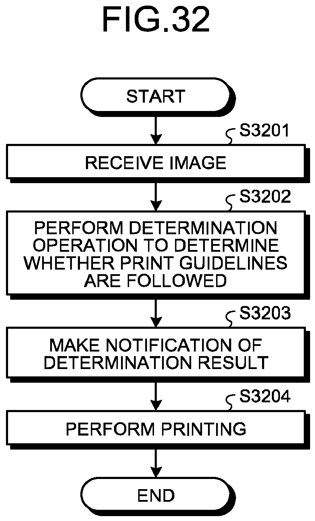

FIG. 32 is a flowchart for explaining an exemplary flow of operations performed by the inspecting unit 208 included in the image forming device according to a third modification example. In FIG. 32 is illustrated the flow of operations performed using the receiving unit 2081, the compliance determining unit 2082, and the notifying unit 2084 included in the inspecting unit 208.

Firstly, at Step S3201, the image receiving unit 2081 receives an image. In a web application/order software, the uploading of an image designed by the user is received. In an image forming device, an image for printing is received.

Then, at Step S3202, the compliance determining unit 2082 performs the compliance determination operation for determining whether the image received by the image receiving unit 2081 complies with the print guidelines.

Subsequently, at Step S3203, the notifying unit 2084 notifies the user about the determination result by the compliance determining unit 2082. Meanwhile, if the compliance determining unit 2082 determines that the image received by the image receiving unit 2081 does not comply with the print guideline, then operation at Step S3204 can be omitted.

If it is determined that the image complies with the print guidelines, then the system control proceeds to Step S3204 at which the inspecting unit 208 makes the image forming unit of the image forming device print the image determined to comply with the print guidelines.

Fourth modification example

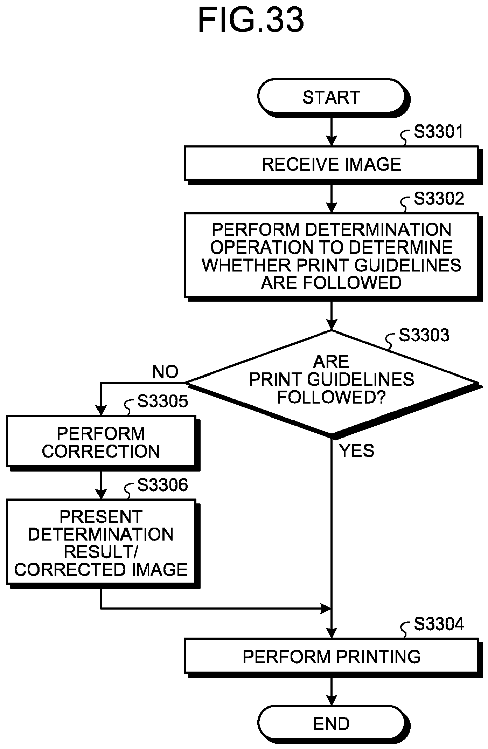

FIG. 33 is a flowchart for explaining an exemplary flow of operations performed by the inspecting unit 208 included in the image forming device according to a fourth modification example. In FIG. 33 is illustrated the flow of operations performed using the receiving unit 2081, the compliance determining unit 2082, the correcting unit 2083, and the notifying unit 2084 included in the inspecting unit 208.

Firstly, at Step S3301, the image receiving unit 2081 receives an image. In a web application/order software, the uploading of an image designed by the user is received. In an image forming device, an image for printing is received.

Then, at Step S3302, the compliance determining unit 2082 performs the compliance determination operation for determining whether the image received by the image receiving unit 2081 complies with the print guidelines.

Subsequently, at Step S3303, the compliance determining unit 2082 diverges according to the determination result.

If it is determined that the image complies with the print guidelines (Yes at Step S3303), then the system control proceeds to Step S3304 at which the inspecting unit 208 makes the image forming unit of the image forming device print the image determined to comply with the print guidelines.

On the other hand, if it is determined that the image does not comply with the print guidelines (No at Step S3303), then the system control proceeds to Step S3305 at which the correcting unit 2083 performs the correction operation for correcting the image received at the image receiving unit 2081.

Then, at Step S3306, the notifying unit 2084 presents the determination result by the compliance determining unit 2082 or presents the corrected image obtained by the correcting unit 2083.

Subsequently, the system control proceeds to Step S3304 at which the inspecting unit 208 makes the image forming unit of the image forming device print the image corrected by the correcting unit 2083.

Fifth modification example

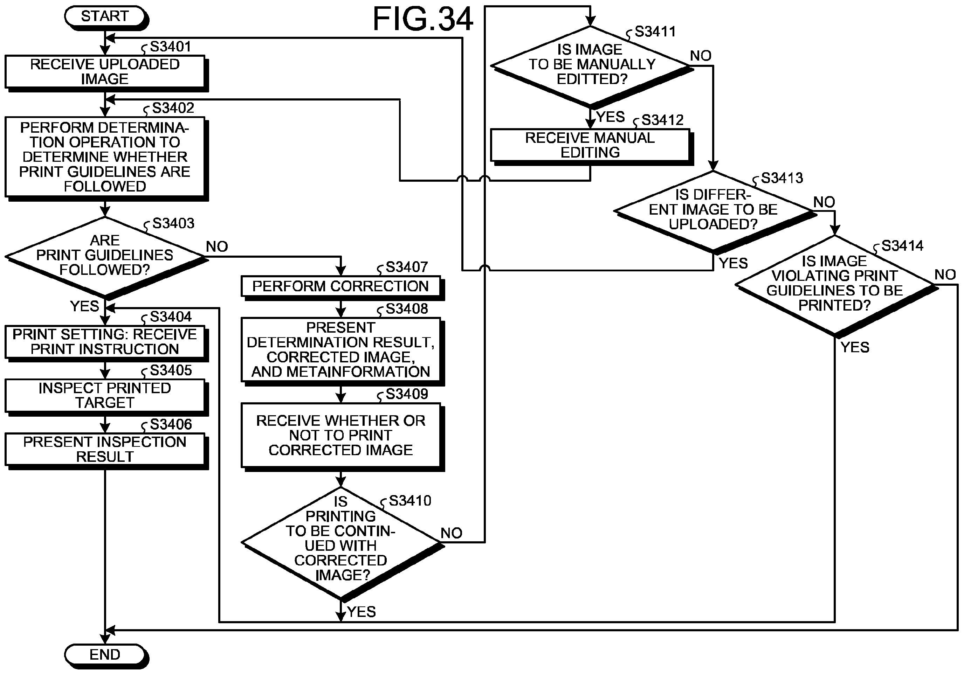

FIG. 34 is a flowchart for explaining an exemplary flow of operations performed in the information processing device 200 and the image forming device according to a fifth modification example. In FIG. 34 is illustrated the flow of operations performed when the information processing device 200 functioning as the image inspection device is installed in an image forming device.

Firstly, at Step S3401, the image receiving unit 2081 receives an image. In a web application/order software, the uploading of an image designed by the user is received. In an image forming device, an image for printing is received.

Then, at Step S3402, the compliance determining unit 2082 performs the compliance determination operation for determining whether the image received by the image receiving unit 2081 complies with the print guidelines.

Subsequently, at Step S3403, the compliance determining unit 2082 diverges according to the determination result.

If it is determined that the image complies with the print guidelines (Yes at Step S3403), then the inspecting unit 208 receives print setting/a print instruction at Step S3404. Herein, the number of print copies can be specified to the image receiving unit 2081.

Then, at Step S3405, the inspecting unit 208 inspects the printed target. At Step S3406, the inspecting unit 208 presents the inspection result.

Meanwhile, the operations performed at Steps S3405 and S3406 are performed as the operations of the inspecting unit 208. Hence, if the inspecting unit 208 functions only as an image forming device, those operations need not be performed.

Meanwhile, if it is determined that the image does not comply with the print guidelines (No at Step S3403), then the correcting unit 2083 performs the correction operation at Step S3407 for correcting the image received by the image receiving unit 2081.

Then, at Step S3408, the notifying unit 2084 presents the metainformation for enabling the user to either select the determination result by the compliance determining unit 2082 or select the corrected image obtained by the correcting unit 2083.

Subsequently, at Step S3409, the image receiving unit 2081 receives whether or not the printing is to be continued for printing the corrected image. Then, at Step S3410, the image receiving unit 2081 diverges based on the received result.

When the printing is to be continued with the corrected image (Yes at Step S3410), then the system control returns to Step S3404. In that case, it is possible to specify the number of print copies of the received image and the number of print copies of the corrected image.

On the other hand, when the printing is not to be continued with the corrected image (No at Step S3410), the system control proceeds to Step S3411 and it is determined whether manual editing is to be performed. If it is determined that manual editing is to be performed (Yes at Step S3411), then the system control proceeds to Step S3412 at which the image receiving unit 2081 receives manual editing. Then, the system control returns to Step S3402.

On the other hand, if it is determined that manual editing is not to be performed (No at Step S3411), then the system control proceeds to Step S3413 at which it is determined whether or not a different image is to be uploaded. If it is determined that a different image is to be uploaded (Yes at Step S3413), then the system control returns to Step S3401.

On the other hand, if it is determined that a different image is not to be uploaded (No at Step S3413), then the system control proceeds to Step S3414 at which it is determined whether or not to print the image that violates the print guidelines. If it is determined to print the image that violates the print guidelines (Yes at Step S3414), then the system control returns to Step S3404.

On the other hand, if it is determined not to print the image that violates the print guidelines (No at Step S3414), then it marks the end of the operations.

Meanwhile, the functions explained above according to embodiment can be implemented using one or more processing circuits. Herein, the term "processing circuit" either implies a processor that is implemented using an electronic circuit programmed to execute the functions using software; or implies a device, such as an application specific integrated circuit (ASIC), a digital signal processor (DSP), a field programmable gate array (FPGA), or a conventional circuit module, that is designed to execute the functions explained above.

The group of devices mentioned in the embodiment represents nothing more than one of a plurality of computing environments for implementing the embodiment disclosed in the present written description. In a particular embodiment, the information processing device 200 includes a plurality of computing devices called a server cluster. The computing devices are configured to communicate with each other via a communication link of an arbitrary type such as a network or a shared memory, and perform the operations disclosed in the present written description. In an identical manner, the information processing device 200 can be configured to include a plurality of computing devices configured to communicate with each other.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

**Claims**

1. An image forming device comprising:

   a receiving unit configured to receive an image to be printed; and
   a determining unit configured to determine whether the image received by the receiving unit complies with a condition predetermined to be satisfied for printing.

2. The image forming device according to claim 1, further comprising a notifying unit configured to, when determination result by the determining unit indicates noncompliance, make notification that the image does not comply with the condition.

3. The image forming device according to claim 1, further comprising a correcting unit configured to, when determination result by the determining unit indicates noncompliance, correct the image to comply with the condition.

4. The image forming device according to claim 3, further comprising a notifying unit configure to, when determination result by the determining unit indicates noncompliance, make notification that the image does not comply with the condition and make notification of a correction result by the correcting unit.

5. The image forming device according to claim 4, wherein the receiving unit is configured to receive a number of print copies of the received image and a number of print copies of a corrected image by the correcting unit, to treat as images to be printed.

6. The image forming device according to any one of claims 2 and 4, wherein the notifying unit is configured to make notification of a determination result by the determining unit, and make notification of metainformation, and the receiving unit is configured to receive selection of the metainformation.

7. The image forming device according to any one of claims 1 to 6, wherein the determining unit is configured to compare a size of the received image with a size specified in the condition, and determine whether the image complies with the condition.

8. The image forming device according to any one of claims 1 to 6, wherein the determining unit is configured to determine whether the received image complies with the condition, based on whether or not a color is constant at edge of a print range of a print object.

9. The image forming device according to any one of claims 1 to 6, wherein the determining unit is configured to determine whether the received image complies with the condition, according to a degree of similarity between an outer shape of a print object and a design of an image for printing.

10. The image forming device according to any one of claims 1 to 6, wherein the determining unit is configured to perform determination using machine learning trained to distinguish between an image complying with the condition and an image not complying with the condition.

11. The image forming device according to any one of claims 3 to 5, wherein the correcting unit is configured to perform variable magnification of, or translate a part or a whole of the received image, or correct a color of a part of the received image to another color, to correct the received image to comply with the condition.

12. The image forming device according to any one of claims 3 to 5, wherein the correcting unit is configured to perform correction using machine learning trained to convert an image not complying with the condition into an image complying with the condition.

13. An information processing device comprising:

the image forming device according to any one of claims 1 to 12;
a control unit configured to receive a determination result and accordingly adjust an inspection criterion; and
an inspecting unit configured to inspect a print result.

14. A computer-readable medium including programmed instructions that cause a computer to function as:

a receiving unit configured to receive an image to be printed; and
a determining unit configured to determine whether the image received by the receiving unit complies with a condition predetermined to be satisfied for printing.

15. An image forming method implemented in an image forming device, comprising:

receiving, by a receiving unit, an image to be printed; and
determining, by a determining unit, whether the image received by the receiving unit complies with a condition predetermined to be satisfied for printing.

EP 3 979 197 A1

# FIG.1

# FIG.2

# FIG.3

# FIG.4

# FIG.5

# FIG.6

```
          200                    100
           ⌇                      ⌇
  ┌─────────────────┐      ┌──────────────┐
  │   INFORMATION   │      │   IMAGING    │
  │   PROCESSING    │──────│   DEVICE     │
  │     DEVICE      │      └──────────────┘
  └─────────────────┘             ⌇
           │                     102
  ┌────────┼──────────────────────────────────────┐
  │  ┌─────────────┐                               │
  │  │  I/O POWER  │~107                            │
  │  │     BOX     │                                │
  │  └─────────────┘                               │
  │     │      │                    106b           │
  │     │      │                     ⌇             │
  │     │      │              ┌──────────────┐     │
  │     │      └──────────────│   SENSOR     │     │
  │     │                     └──────────────┘     │
  │  ┌─────────────┐                               │
  │  │ LIGHT SOURCE│          ┌──────────────┐     │
  │ 108~│POWER BOX  │─────────│   SENSOR     │     │
  │  └─────────────┘          └──────────────┘     │
  │   │     │     │                  ⌇             │
  │   │     │     │                106c            │
  │┌──────┐┌──────┐┌──────────┐                    │
  ││FIRST ││SECOND││BACKLIGHT │                    │
  ││RING  ││RING  ││ILLUMINA- │                    │
  ││ILLUM.││ILLU- ││TION      │                    │
  ││DEVICE││MINAT.││DEVICE    │                    │
  │└──────┘│DEVICE│└──────────┘                    │
  │   ⌇    └──────┘     ⌇       INSPECTION         │
  │  103      ⌇        105        DEVICE           │
  │          104                                   │
  └────────────────────────────────────────────────┘
```

# FIG.7

INFORMATION PROCESSING DEVICE 200

HD ~504

HDD CONTROL-LER 505

EXTERNAL DEVICE CONNECTION I/F 508

CPU 501

ROM 502

RAM 503

DISPLAY 506

510

NETWORK I/F 509

KEYBOARD 511

POINTING DEVICE 512

DVD-RW DRIVE 514

MEDIA I/F 516

513

MEDIA 515

EP 3 979 197 A1

# FIG.8

200

FIRST IMAGE
OBTAINING UNIT — 201

SECOND IMAGE
OBTAINING UNIT — 202

THIRD IMAGE
OBTAINING UNIT — 203

IMAGE
SYNTHESIZING UNIT — 204

LUMINANCE SETTING
UNIT — 205

IDENTIFYING UNIT — 206

THRESHOLD VALUE
SWITCHING UNIT — 207

INSPECTING UNIT — 208

# FIG.9

```
                    ┌──────────────┐
                    │    START     │
                    └──────┬───────┘
                           │          ⌒S1
          ┌────────────────▼────────────────┐
          │  CONTROL FIRST RING ILLUMINATION │
          │    DEVICE AND IMAGING DEVICE     │
          └────────────────┬────────────────┘
                           │          ⌒S2
          ┌────────────────▼────────────────┐
          │   OBTAIN SIGNAL LEVEL (LEVEL A) OF │
          │   TAKEN IMAGE OF EDGE REGION      │
          │            SURFACE               │
          └────────────────┬────────────────┘
                           │          ⌒S3
          ┌────────────────▼────────────────┐
          │      CONTROL SECOND RING         │
          │    ILLUMINATION DEVICE AND       │
          │        IMAGING DEVICE            │
          └────────────────┬────────────────┘
                           │          ⌒S4
          ┌────────────────▼────────────────┐
          │   OBTAIN SIGNAL LEVEL (LEVEL B) OF │
          │    TAKEN IMAGE OF FLAT SURFACE    │
          └────────────────┬────────────────┘
                           │          ⌒S5
          ┌────────────────▼────────────────┐
          │   SET LUMINANCE OF FIRST RING    │
          │    ILLUMINATION DEVICE AND       │
          │ SECOND RING ILLUMINATION DEVICE  │
          └────────────────┬────────────────┘
                           │
                    ┌──────▼───────┐
                    │     END      │
                    └──────────────┘
```

# FIG.10

```
        ┌─────────────┐
        │    START    │
        └─────────────┘
               │
               ▼              ⌇S11
┌──────────────────────────────────┐
│ CONTROL BACKLIGHT ILLUMINATION    │
│ DEVICE AND IMAGING DEVICE         │
└──────────────────────────────────┘
               │
               ▼              ⌇S12
┌──────────────────────────────────┐
│ RECOGNIZE AREA COVERED BY         │
│ INSPECTION OBJECT                 │
└──────────────────────────────────┘
               │
               ▼              ⌇S13
┌──────────────────────────────────┐
│ CONTROL FIRST RING ILLUMINATION   │
│ DEVICE AND IMAGING DEVICE         │
└──────────────────────────────────┘
               │
               ▼              ⌇S14
┌──────────────────────────────────┐
│ OBTAIN IMAGE OF EDGE REGION       │
│ SURFACE OF INSPECTION OBJECT      │
└──────────────────────────────────┘
               │
               ▼              ⌇S15
┌──────────────────────────────────┐
│ CONTROL SECOND RING               │
│ ILLUMINATION DEVICE AND           │
│ IMAGING DEVICE                    │
└──────────────────────────────────┘
               │
               ▼              ⌇S16
┌──────────────────────────────────┐
│ OBTAIN IMAGE OF FLAT SURFACE OF   │
│ INSPECTION OBJECT                 │
└──────────────────────────────────┘
               │
               ▼              ⌇S17
┌──────────────────────────────────┐
│ PERFORM IMAGE SYNTHESIS           │
└──────────────────────────────────┘
               │
               ▼
        ┌─────────────┐
        │     END     │
        └─────────────┘
```

FIG.11

SILHOUETTE IMAGE

SPECULAR-REFLECTION
ILLUMINATION IMAGE

DIFFUSED-REFLECTION
ILLUMINATION IMAGE

SYNTHETIC IMAGE

GRADATION
CORRECTION IMAGE
(INSPECTION IMAGE)

COM-
PAR-
ISON

MASTER IMAGE

# FIG.12

```
        ┌─────────────────┐
        │      START      │
        └────────┬────────┘
                 │            ⌇S21
        ┌────────▼────────┐
        │ OBTAIN RIP DATA │
        │     (CMYK)      │
        └────────┬────────┘
                 │            ⌇S22
        ┌────────▼────────────────┐
        │ PERFORM COLOR CONVERSION│
        │  OPERATION (CMYK→RGB)   │
        └────────┬────────────────┘
                 │            ⌇S23
        ┌────────▼─────────────────┐
        │ PERFORM PREPROCESSING FOR│
        │     PRINTER EMULATION    │
        └────────┬─────────────────┘
                 │            ⌇S24
        ┌────────▼────────┐
        │IDENTIFY IMAGE TYPE│
        └────────┬────────┘
                 │            ⌇S25
        ┌────────▼────────┐
        │GENERATE MASTER IMAGE│
        │      (RGB)      │
        └────────┬────────┘
                 │
        ┌────────▼────────┐
        │       END       │
        └─────────────────┘
```

# FIG.13

TYPE 1: CIRCLE

TYPE 2: CIRCLE AND PICTURE

TYPE 3: CIRCLE IN PICTURE

TYPE 0: NORMAL (OTHER THAN TYPE 1 TO TYPE 3)

EP 3 979 197 A1

# FIG.14

RECOGNIZED CIRCLE

COLOR IN INNER PERIPHERY

COLOR IN OUTER PERIPHERY

| TYPE | NUMBER OF COLORS IN OUTER PERIPHERY | DOMINANT COLOR IN INNER PERIPHERY |
|---|---|---|
| 1 | 1 | DIFFERENT COLOR THAN COLOR IN OUTER PERIPHERY |
| 2 | 1 | SAME COLOR AS COLOR IN OUTER PERIPHERY |
| 3 | MULTIPLE | DON'T CARE |

## FIG.15A

TYPE 0:
NORMAL

OFF-CENTER

TYPE 2:
CIRCLE AND PICTURE

## FIG.15B

TYPE 2:
CIRCLE AND PICTURE

OFF-
CENTER
(TO HUMAN
EYE)

TYPE 1:
CIRCLE

## FIG.15C

TYPE 1:
CIRCLE

OFF-
CENTER
(TO HUMAN
EYE)

TYPE 3:
CIRCLE IN PICTURE

# FIG.16

| TYPE LENIENT INSPEC-TION | 1 | 2 | 3 | 4 | 5 | 6 | 7 | 8 | 9 | 10 | STRICT INSPEC-TION |
|---|---|---|---|---|---|---|---|---|---|---|---|

3  2  1

# FIG.17

START

┌─────────────────────────────────────┐  S31
│ OBTAIN MASTER IMAGE (RGB) AND        │
│ TARGET IMAGE FOR INSPECTION          │
│ (RGB)                                │
└─────────────────────────────────────┘

┌─────────────────────────────────────┐  S32
│ PERFORM POSITION ADJUSTMENT          │
│ (ROTATION/TRANSLATION)               │
└─────────────────────────────────────┘

┌─────────────────────────────────────┐  S33
│ DETECT OFF-CENTER                    │
└─────────────────────────────────────┘

┌─────────────────────────────────────┐  S34
│ DRAW INSPECTION RESULT               │
└─────────────────────────────────────┘

┌─────────────────────────────────────┐  S35
│ DISPLAY RESULTANT IMAGE              │
│ (RGB)                                │
└─────────────────────────────────────┘

END

# FIG.18

| TYPE | COEFFICIENT $C_{Type}$ |
|------|------------------------|
| 0 | 1.0 |
| 1 | 0.5 |
| 2 | 0.7 |
| 3 | 0.8 |

# FIG.19

# FIG.20A

EXAMPLE IN WHICH GUIDELINES ARE FOLLOWED

# FIG.20B

RANGE SPECIFIED IN PRINT GUIDELINES

# FIG.20C

EXAMPLE IN WHICH GUIDELINES ARE NOT FOLLOWED

# FIG.21

```
                                                         ┌208
┌──────────────────────────────────────────────────────────────────┐
│                  ┌2081                        ┌2082                │
│  IMAGE      ┌──────────┐              ┌──────────────┐             │
│             │  IMAGE   │    IMAGE     │ COMPLIANCE   │             │
│  META-      │ RECEIVING│─────────────→│ DETERMINING  │             │
│  INFOR-     │   UNIT   │              │    UNIT      │             │
│  MATION     └──────────┘              └──────────────┘             │
│  SELECTION     │   IMAGE                   DETERMI-                │
│  RESULT    IMAGE   DETERMINA-              NATION                  │
│              │     TION RESULT            RESULT                   │
│              ↓                              ↓                      │
│          ┌──────────┐              ┌──────────────┐               │
│          │ NOTIFYING│←─────────────│    IMAGE     │               │
│  DETERMI-│   UNIT   │ CORRECTION   │  CORRECTING  │               │
│  NATION  └──────────┘  RESULT      │     UNIT     │               │
│  RESULT      2084                  └──────────────┘               │
│  COR-                                    2083                     │
│  RECTION                                                          │
│  RESULT                                                           │
│  META-                                                            │
│  INFOR-                                                           │
│  MATION                                                           │
└──────────────────────────────────────────────────────────────────┘
```

# FIG.22

IMAGE DOES NOT LIE OVER ENTIRE PRINT RANGE

RECEIVED IMAGE

RANGE SPECIFIED IN PRINT GUIDELINES

# FIG.23

RECEIVED IMAGE

RANGE SPECIFIED IN PRINT
GUIDELINES

FIG.24A

FIG.24B

# FIG.25

RECEIVED IMAGE

CORRECTED IMAGE

RANGE SPECIFIED IN
PRINT GUIDELINES

RANGE SPECIFIED IN
PRINT GUIDELINES

# FIG.26

RECEIVED IMAGE

CORRECTED IMAGE

RANGE SPECIFIED IN
PRINT GUIDELINES

RANGE SPECIFIED IN
PRINT GUIDELINES

# FIG.27

# FIG.28

RECEIVED IMAGE    CORRECTED IMAGE

META-INFORMATION

PRICE  aaa                    PRICE  bbb
DELIVERY TIME  xxx        DELIVERY TIME  yyy
PRINT PLAN  sss            PRINT PLAN    ttt

EP 3 979 197 A1

# FIG.29

RECEIVED IMAGE

CORRECTED IMAGE

META-INFORMATION

PRICE aaa
DELIVERY TIME xxx
PRINT PLAN sss

PRICE bbb
DELIVERY TIME yyy
PRINT PLAN ttt

B1

CANCEL

B2

EP 3 979 197 A1

# FIG.30

```
        ┌──────────────┐
        │    START     │
        └──────────────┘
               │
               ▼            ⌐S3001
   ┌────────────────────────┐
   │     RECEIVE IMAGE      │
   └────────────────────────┘
               │
               ▼            ⌐S3002
   ┌────────────────────────┐
   │  PERFORM DETERMINATION │
   │  OPERATION TO DETERMINE│
   │  WHETHER PRINT GUIDELINES│
   │      ARE FOLLOWED      │
   └────────────────────────┘
               │
               ▼              ⌐S3003
            ◇ ARE
  NO   PRINT GUIDELINES
 ◄─────   FOLLOWED? ◇
 │
 ▼  ⌐S3005                  │ YES
┌──────────────────┐         ▼           ⌐S3004
│ CANCEL PRINTING  │    ┌────────────────────────┐
└──────────────────┘    │    PERFORM PRINTING    │
                        └────────────────────────┘
                                   │
                                   ▼
                            ┌──────────────┐
                            │     END      │
                            └──────────────┘
```

# FIG.31

```
        ( START )
            |
            |  S3101
            v
  +--------------------+
  |   RECEIVE IMAGE    |
  +--------------------+
            |
            |  S3102
            v
  +--------------------+
  | PERFORM DETERMINATION |
  | OPERATION TO DETERMINE |
  | WHETHER PRINT GUIDELINES |
  |    ARE FOLLOWED    |
  +--------------------+
            |
            |         S3103
            v
         /        \
        /   ARE    \
  NO   / PRINT GUIDELINES \
<------  FOLLOWED?  
   \        /
    \      /
     \    /  YES
  S3104  |
  +--------------+     |
  |   PERFORM    |     |
  |  CORRECTION  |     |
  +--------------+     |
        |              |
        +------------->|
                       |
                       |  S3105
                       v
             +--------------------+
             |  PERFORM PRINTING  |
             +--------------------+
                       |
                       v
                   ( END )
```

# FIG.32

```
           ┌─────────────┐
           │    START    │
           └──────┬──────┘
                  │       ┌ S3201
                  ▼
        ┌──────────────────────┐
        │    RECEIVE IMAGE     │
        └──────────┬───────────┘
                   │      ┌ S3202
                   ▼
        ┌──────────────────────┐
        │ PERFORM DETERMINATION│
        │ OPERATION TO DETERMINE│
        │ WHETHER PRINT GUIDELINES│
        │     ARE FOLLOWED     │
        └──────────┬───────────┘
                   │      ┌ S3203
                   ▼
        ┌──────────────────────┐
        │  MAKE NOTIFICATION OF │
        │ DETERMINATION RESULT │
        └──────────┬───────────┘
                   │      ┌ S3204
                   ▼
        ┌──────────────────────┐
        │   PERFORM PRINTING   │
        └──────────┬───────────┘
                   │
                   ▼
           ┌─────────────┐
           │     END     │
           └─────────────┘
```

# FIG.33

START

RECEIVE IMAGE ~S3301

PERFORM DETERMINATION
OPERATION TO DETERMINE
WHETHER PRINT GUIDELINES
ARE FOLLOWED ~S3302

ARE
PRINT GUIDELINES
FOLLOWED? ~S3303

NO

PERFORM
CORRECTION ~S3305

PRESENT
DETERMINATION
RESULT/
CORRECTED IMAGE ~S3306

YES

PERFORM PRINTING ~S3304

END

FIG.34

Europäisches
Patentamt

European
Patent Office

Office européen
des brevets

# EUROPEAN SEARCH REPORT

Application Number

EP 21 19 9674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/240376 A1 (UWATOKO KOUKI [JP] ET AL) 27 October 2005 (2005-10-27) | 1,2, 8-10, 13-15 | INV. G06T7/00 H04N1/00 |
| Y | * paragraphs [0033], [0177] - [0186]; claim 1; figures 2, 8 * | 3-5,7, 11,12 | B41F33/00 |
| X | US 2006/215212 A1 (TAO KOZO [JP]) 28 September 2006 (2006-09-28) * paragraphs [0042] - [0044]; claim 1; figure 1 * | 1,2,6, 14,15 | |
| Y | US 2009/190151 A1 (OGINO KUMIKO [JP]) 30 July 2009 (2009-07-30) * paragraphs [0052] - [0058]; claims 1, 4 * | 5,7 | |
| Y | US 2020/234422 A1 (ESUMI YOSHIHIRO [JP] ET AL) 23 July 2020 (2020-07-23) * claim 1; figure 4 * | 3-5,11, 12 | |

TECHNICAL FIELDS
SEARCHED      (IPC)

G06T
H04N
B41L
B41F

The present search report has been drawn up for all claims

| Place of search | Date of completion of the search | Examiner |
|---|---|---|
| The Hague | 25 January 2022 | De Meyer, Doris Anna |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 19 9674

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2022

| Patent document cited in search report | | Publication date | Patent family member(s) | | Publication date |
|---|---|---|---|---|---|
| US 2005240376 | A1 | 27-10-2005 | JP | 4538845 B2 | 08-09-2010 |
| | | | JP | 2005309078 A | 04-11-2005 |
| | | | US | 2005240376 A1 | 27-10-2005 |
| US 2006215212 | A1 | 28-09-2006 | JP | 2006224465 A | 31-08-2006 |
| | | | US | 2006215212 A1 | 28-09-2006 |
| US 2009190151 | A1 | 30-07-2009 | CN | 101494712 A | 29-07-2009 |
| | | | JP | 2009175529 A | 06-08-2009 |
| | | | US | 2009190151 A1 | 30-07-2009 |
| US 2020234422 | A1 | 23-07-2020 | CN | 111464714 A | 28-07-2020 |
| | | | JP | 2020118497 A | 06-08-2020 |
| | | | US | 2020234422 A1 | 23-07-2020 |

EPO FORM P0459

For more details about this annex : see Official Journal of the European Patent Office, No. 12/82

**EP 3 979 197 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002501265 W